(19) **Europäisches Patentamt**

**European Patent Office**

**Office européen des brevets**

(11) **EP 0 872 405 B1**

(12) **EUROPEAN PATENT SPECIFICATION**

(45) Date of publication and mention
of the grant of the patent:
**30.06.2004 Bulletin 2004/27**

(51) Int Cl.$^7$: **B62D 5/06**, B62D 6/00,
B62D 5/09
// B62D101:00, B62D113:00

(21) Application number: **98106776.2**

(22) Date of filing: **14.04.1998**

(54) **Power steering apparatus with steering wheel angle correction device**

Servolenkung mit Korrektureinrichtung für den Lenkradwinkel

Direction assistée avec dispositif de correction pour l'angle du volant

(84) Designated Contracting States:
**DE FR GB**

(30) Priority: **15.04.1997 JP 9729997**
**16.04.1997 JP 9875797**

(43) Date of publication of application:
**21.10.1998 Bulletin 1998/43**

(73) Proprietor: **Kabushiki Kaisha Toyota Jidoshokki
Kariya-shi, Aichi-ken (JP)**

(72) Inventor: **Ishikawa, Kazuo
2 chome, Kariya-shi, Aichi-ken (JP)**

(74) Representative:
**Leson, Thomas Johannes Alois, Dipl.-Ing. et al
Patentanwälte
Tiedtke-Bühling-Kinne & Partner,
Bavariaring 4
80336 München (DE)**

(56) References cited:
**US-A- 4 703 819**

• **PATENT ABSTRACTS OF JAPAN vol. 014, no. 393 (M-1015), 24 August 1990 (1990-08-24) -& JP 02 147474 A (TOYOTA AUTOM LOOM WORKS LTD), 6 June 1990 (1990-06-06)**

## Description

The present invention relates to a device that corrects the discrepancy between the steering wheel angle and the angle of power-steered vehicle wheels incorporated in an industrial vehicle such as a forklift.

A typical power steering apparatus is fully hydraulic and includes a steering cylinder and an oil pump. The oil pump supplies oil to the steering cylinder to assist steering action. The amount of oil supplied to the cylinder is determined by rotation amount of the steering wheel.

In an industrial vehicle such as a forklift, the steering wheel is provided with a knob. The knob allows an operator to steer the vehicle with one hand and to perform an operation for lifting an object with the other hand at the same time. The operator judges the angle of the wheel angle of the vehicle wheels by referring to the position of the knob. However, part of the oil discharged from the oil pump is not used to actuate the steering cylinder when the efficiency of a steering unit (represented by dividing the actual displacement amount of oil from the steering unit by the theoretical discharged amount of oil) is less than 100%. This changes the correspondence between the position of the knob and the angle of the vehicle wheels. The efficiency of the steering unit is lowered when the steering wheel is slowly rotated or when oil is leaking from the hydraulic system, which includes the steering cylinder.

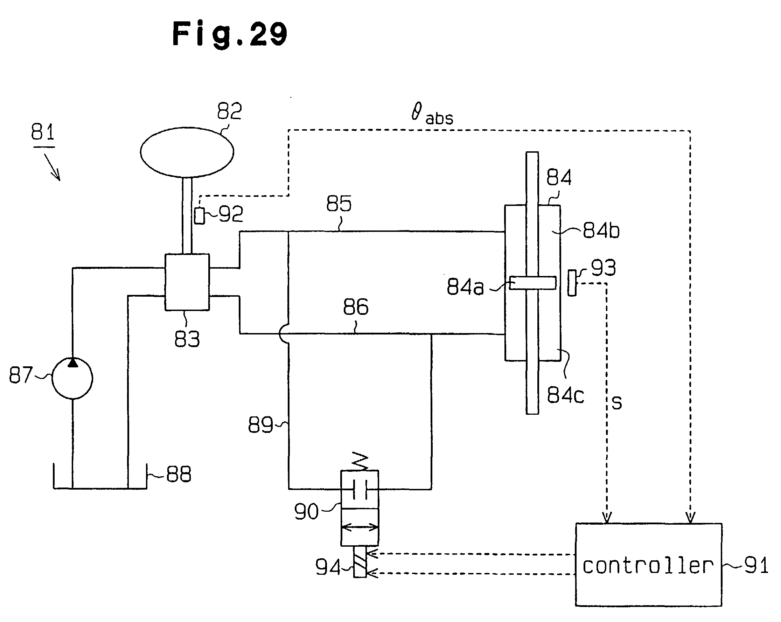

Japanese Unexamined Patent Publication No. 3-30544 and Japanese Unexamined Patent Publication No. 4-24270 disclose systems for correcting discrepancy of the steering wheel angle relative to the angle of the vehicle wheels. The steering wheel angle refers to a rotational angle of a steering wheel relative to a position of the steering wheel at which the vehicle travels in a straight line. The angle of vehicle wheels refers to an angle defined by a front-to-rear axis of the vehicle and a plane perpendicular to the rotational axis of the vehicle wheels. Fig. 29 shows a power steering apparatus 81 according to Publication No. 4-24270.

The apparatus 81 includes a steering wheel 82, a steering unit 83, a steering cylinder 84 for steering vehicle wheels (not shown), hydraulic lines 85, 86 and a pump 87. The steering unit 83 is actuated by rotation of the steering wheel 82 and is connected with the steering cylinder 84 by the hydraulic lines 85, 86. When the steering wheel 82 is rotated, one of the lines 85, 86 supplies oil that is pressurized by the pump 87 to the steering cylinder 84, and the other line returns oil in the cylinder 84 to an oil tank 88. The lines 85, 86 are connected with each other by a drain line 89, which includes an electromagnetic switching valve 90.

A rotational angle sensor 92 sends a signal θ abs that indicates the rotational angle of the steering wheel 82 to a controller 91. A cylinder position sensor 93 sends a signal "s" that indicates the stroke of the cylinder 84 to the controller 91. The controller 91 computes a target cylinder stroke xg based on the signal θ abs by referring to a map. The controller 91 also computes the actual cylinder stroke x of the steering cylinder 84 based on the signal "s". When the difference between the actual stroke x and the target stroke xg exceeds a predetermined allowable limit, the controller 91 excites a solenoid 94 of the valve 90 to open the valve 90.

When opened, the switch valve 90 connects the lines 85, 86 with each other by the drain line 89. In this state, part of oil in one of the lines 85, 86 supplying the oil to the cylinder 84 flows to the other line, which is returning oil to the tank 88. This causes the steering wheel 82 to race. That is, rotation of the steering wheel 82 does not change the angle of the vehicle wheels until the angle of the steering wheel 82 reaches a position corresponding to the angle of the vehicle wheels within a predetermined tolerance.

A correction of the steering wheel angle causes the steering wheel 82 to race when the operator is rotating the steering wheel 82. Therefore, the pivoted amount of the vehicle wheels falls short of the amount that operator intended. This may disturb the operator. When the vehicle is moving at a low speed, the difference between the actual pivoted amount of the vehicle wheels and the intended pivoted amount is not disturbing since the vehicle moves relatively short distance during a correction of the steering wheel angle. However, when the vehicle is moving at a high speed, the vehicle moves a relatively long distance during a correction. Therefore, the difference causes the vehicle to respond in an unusual manner, which may disturb the operator.

Further, there is less play in the wheel of a fully hydraulic steering apparatus than in that of a mechanical steering apparatus. In other words, when the operator starts rotating the steering wheel 82, a valve in the steering unit 83 is opened in a relatively short time. Generally, when the vehicle is traveling in a straight line the operator continually fine-adjusts the steering wheel. Therefore, less play in the steering wheel 82 degrades the straight line stability of the vehicle.

When the steering wheel angle is being corrected, some hydraulic oil flows between the lines 85, 86 and is drawn back to the tank 88. In this state, the vehicle wheels are not interlocked with the steering wheel 82. If the operator rotates the steering wheel 82 to change the radius of turn when the vehicle is turning, the rotation of the steering wheel may not change the angle of the vehicle wheels. Further, the operator concentrates on the manipulation of the steering wheel when the vehicle is turning with a short radius or when the vehicle is turning at a relatively high speed. Thus, correction of the steering wheel angle may disturb the operator at these times in pareticular.

The steering cylinder 84 includes a piston 84a and oil chambers 84b, 84c, which are defined on the sides of the piston 84a. During steering wheel angle correction, the oil chambers 84b, 84c are connected with each other by the drain passage 89. Therefore; the vehicle wheels are not held at a position corresponding to the angle of the steering wheel 82. Further, when the steering wheel 82 is quickly rotated, the steering unit 83 supplies the steering cylinder 84 with relatively great amount of hydraulic oil. In this case, the pressure of the supplied oil is excessive and suppresses the operation of the steering cylinder 84. This prevents the vehicle wheels from responding to the manipulation of the steering wheel 82.

Contrarily, if the steering wheel 82 is slowly rotated, a relatively small amount of oil is supplied to the steering cylinder 84. The pressure of the oil thus does not suppress the operation of the cylinder 84. This, however, causes the vehicle wheels to be pivoted by a greater amount than the amount corresponding to the rotation amount of the steering wheel 82. This behavior of the vehicle wheels is referred to as "oversteering". Therefore, when the vehicle is turning, a correction of the steering wheel angle causes the vehicle wheels to be excessively steered.

Document JP 02 147474 A (abstract) discloses a phase shift correcting method for full-hydraulic power steering devices providing a hydraulic power steering apparatus and a steering wheel, wherein a steering control is performed by correcting the phase shift of a manually operable steering wheel with respect to the vehicle wheels to be steered. A phase difference between the steering wheel operated by a driver and the vehicle wheels to be steered is sensed based on a rotational angle of the steering wheel with respect to a reference position and the wheel angle between a plane perpendicular to a rotation axis of the vehicle wheel and a line representing straight running of the vehicle. Depending upon the sensed difference members of the hydraulic system are operated for correcting the phase shift by a correction device. The steering wheel is controllably raced when the difference exceeds a predetermined value. The correction is interrupted during straight running. Furthermore, under predetermined conditions, parts of the hydraulic system are switched off to prevent the coil of a solenoid valve from overheating.

Accordingly, it is a first objective of the present invention to provide a steering wheel angle correction device and an industrial vehicle that improve the responsiveness of vehicle wheels to manipulation of a steering wheel when the vehicle is turning at a high speed thereby preventing disturbance of the operator.

A second objective of the present invention is to provide a steering wheel angle correction device and an industrial vehicle that improve the straight line stability of the vehicle.

A third objective of the present invention is to provide a hydraulic power steering apparatus that restricts steering wheel angle correction during a turn of the vehicle if the correction would degrade the control of the vehicle.

To achieve the above objectives, the present invention provides a power steering apparatus and an industrial vehicle having said power steering apparatus as put forth in the appended claims.

The invention, together with objects and advantages thereof, may best be understood by reference to the following description of the presently preferred embodiments together with the accompanying drawings in which:

Fig. 1 is a diagrammatic view showing one embodiment of a hydraulic power steering apparatus according to the present invention;

Fig. 2 is a side view of a forklift;

Fig. 3 is a diagrammatic view showing a rear axle controller;

Fig. 4 is a block diagram showing an electric configuration of the rear axle controller;

Fig. 5 is a map for determining a target steering wheel angle;

Figs. 6(a) and 6(b) are diagrammatic views showing a compensation angle of a steering wheel angle;

Fig. 7 is a flowchart of a routine for controlling tilting of the rear axle;

Fig. 8 is a flowchart of a routine for correcting a steering wheel angle;

Fig. 9 is a flowchart of a routine for correcting a steering wheel angle;

Fig. 10 is a flowchart of a routine for detecting the angle of a steering wheel;

Fig. 11 is a diagrammatic view showing vehicle wheels and moments acting on the wheels;

Fig. 12 is a map for determining an oversteer range;

Fig. 13 is a flowchart of a routine for correcting a steering wheel angle;

Fig. 14 is a map for determining the turning condition of a forklift;

Fig. 15 is a diagrammatic view showing another embodiment of a hydraulic power steering apparatus according to the present invention;

Fig. 16 is diagrammatic view showing an electric configuration of a steering wheel angle correction device;

Fig. 17 is a partial view showing a rotary encoder;

Fig. 18 is a flowchart of a routine for correcting the position of a knob according to another embodiment;

Fig. 19 is a flowchart of an interrupt routine;

Fig. 20 is a timing chart of output signals from a rotary encoder;

Fig. 21 is a map for determining a target angle of a steering wheel;

Fig. 22 is a diagram showing a knob position correction;

Fig. 23 is a diagram showing a knob position correction;

Fig. 24 is a graph showing an area in which the knob position correction is prohibited;

Fig. 25 is a graph like Fig. 24 according to another embodiment;

Fig. 26 is a flowchart like Fig. 18 of the embodiment of Fig. 25;

Fig. 27 a part of a map used in the routine of Fig. 26;

Figs. 28(a) and 28(b) are diagrams showing a,knob position correction according to another embodiment; and

Fig. 29 is a diagrammatic view illustrating a prior art apparatus.

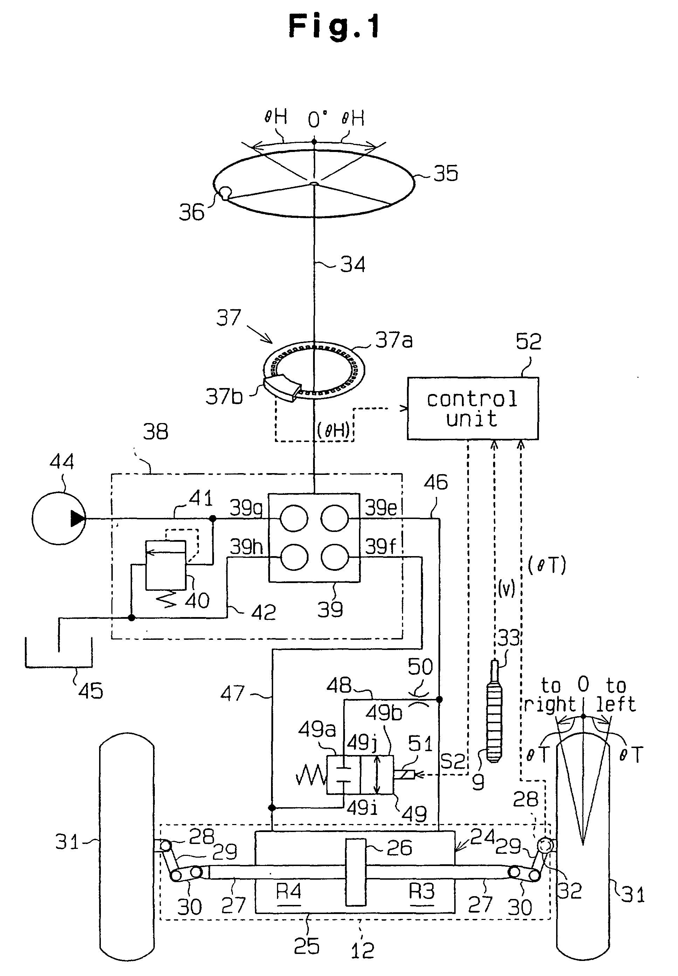

A hydraulic power steering apparatus according to one embodiment of the present invention will be described with reference to Figs 1 to 10. The power steering apparatus is used in forklifts or other industrial vehicles.

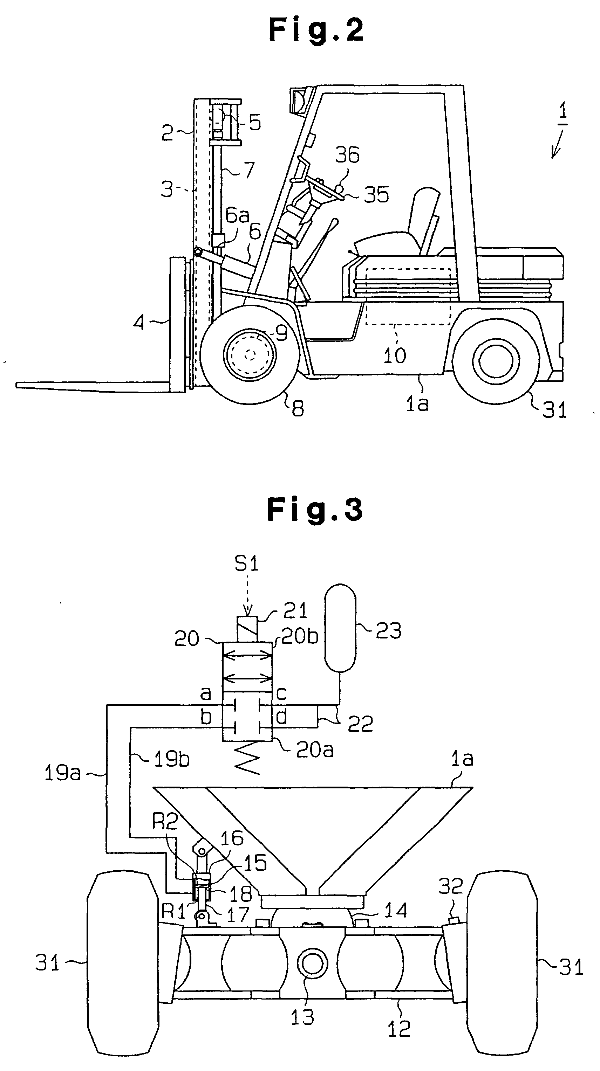

A forklift 1 illustrated in Fig. 2 has driven front wheels and steered rear wheels. The forklift 1 also has a body frame 1a. A pair of outer masts 2 are tiltably supported on the front of the body frame 1a. A pair of inner masts 3 are arranged between the outer masts 2. A fork 4 is mounted on each inner mast 3. The forks 4 are lifted and lowered integrally with the associated inner masts 3 along the outer masts 2. A sprocket wheel 5 is provided on the top end of each inner mast 3. The top end of each outer mast 1 is coupled to the corresponding fork 4 by a chain (not shown), which is engaged with the corresponding sprocket wheel 5. A pair of tilt cylinders 6 are provided on the front of the body frame 1a. Each cylinder 6 includes a piston rod 6a. The distal end of each piston rod 6a is coupled to the corresponding outer mast 2. A lift cylinder 7 is located on the rear side of each outer mast 2. The lift cylinder 7 includes a piston rod (not shown), which is coupled to the top end of the inner mast 3. A front wheel 8 is housed on each side of the front portion of the body frame 1a. Each front wheel 7 is connected to an engine 10 by a differential ring gear 9 and a transmission (not shown). Thus, the front wheels 8 are driven by the engine 10.

As shown in Fig. 3, a rear axle 12, is coupled to a body frame 1a by a center pin 13. The rear axle 12 is pivotally supported by the center pin 13 so that the rear axle 12 is pivotal in a vertical plane (roll direction). An elastomeric support member 14 is arranged between the body frame 1a and the rear axle 12.

A multi-movement single rod type hydraulic cylinder 15 is located between the body frame 1a and the rear axle 12. The cylinder 15 has a housing 16, a piston 18, and a piston rod 17. The housing 16 is secured to the body frame 1a. The piston rod 17 extends from the housing 16 and is secured to the rear axle 12. The piston 18 is coupled to the piston rod 17 and defines a first oil chamber R1 and a second oil chamber R2 in the housing 16. The first oil chamber R1 is connected to an electromagnetic control valve 20 by a passage 19a. The second oil chamber R2 is also connected to the control valve 20 by a passage 19b. The control valve 20 functions as a hydraulic damper that dampens tilting of the rear axle 12 with respect to the body frame 1a. The control valve 20 also locks the tilting of the rear axle 12 with respect to the body frame 1a.

The control valve 20 is a normally closed two-way switch valve that has an electromagnetic solenoid 21 and four ports "a", "b", "c" and "d". The control valve 20 is moved to a disconnection position 20a when the solenoid 21 is de-excited and to a connection position 20b when the solenoid 21 is excited. At the disconnection position 20a, the control valve 20 disconnects the ports "a", "b" from the ports "c", "d". At the connection position 20b, the control valve 20 connects the ports "a", "b" with the ports "c", "d". The port "a" is connected with the oil chamber R1 by the passage 19a and the port "b" is connected with the oil chamber R2 by the passage 19b. The ports "c" and "d" are connected with an accumulator 23 by a passage 22.

As shown in Fig. 1, the rear axle 12 includes a steering cylinder 24. The steering cylinder 24 is a multi-movement double rod type hydraulic cylinder. The steering cylinder 24 has a housing 25 and a piston 26 housed in the housing 25. The piston 26 divides the interior of the housing 25 into an oil chamber R3 and an oil chamber R4. A steering rod 27 is secured to each side of the piston 26. Each rod 27 protrudes from one end of the housing 25. A kingpin 28 is rotatably supported at each end of the rear axle 12. A knuckle 29 is coupled to the end of each rod 27 by a lever 30 and is supported by the kingpin 28. A rear wheel 31 is rotatably supported on each knuckle 29. Each rear wheel 31 is steered to the right and to the left in accordance with actuation of the steering cylinder 24. The angle θT of the rear wheels 31 when the vehicle is traveling in a straight line is zero degrees.

A wheel angle sensor 32 is provided on one end of the rear axle 12. The sensor 32 includes a potentiometer and detects the rotation amount of the associated kingpin 28. A vehicle speed sensor 33 is located in the vicinity of the differential ring gear 9 for detecting the number of rotation of the gear 9 per unit of time.

A steering shaft 34 is rotatably supported in the body frame 1a. The distal end of the shaft 34 is coupled to a steering wheel 35. The steering wheel 35 has a knob 36. The actual steering wheel angle θH of the steering wheel 35 is set to zero degrees when the wheel angle θT of the rear wheels 31 is zero degrees (θT = 0° ). 'The steering shaft 34 is provided with a rotary encoder 37, which detects the angle of the steering wheel 35. The rotary encoder 37 includes a rotary disk 37a and a detector 37b. The disk 37a is fixed to the steering shaft 34 to integrally rotate with the shaft 34. The detector 37b is located at the periphery of the disk 37a for detecting rotation amount of the disk 37a. The disk 37a has forty slits, or openings, which are spaced apart at equal angular intervals.

The disk 37a also has a reference slit that is located in a different radial position from the forty regular slits. The detector 37b detects a reference rotational position of the disk 37a, by the reference slit. The detector 37b has three photodetectors (not shown) and three luminous elements (not shown). Each photodetector faces one of the luminous elements with the disk 37 in between. Two pairs of the photodetectors and the luminous elements correspond to the forty slits. These two photodetectors receive light from the luminous elements through the forty slits of the disk 37a and output pulse signals based on the detected light. The two photodetectors are arranged such that the phases of signals from the each photodetector are electrically displaced by 90 degrees, or by a quarter cycle. The other pair of the photodetector and the luminous element correspond to the reference slit. The photodetectors are, for example, phototransistors, and the luminous elements are, for example, are light emitting diodes. The steering shaft 34 is coupled to a steering unit 38.

The steering unit 38 is a unit for supplying hydraulic oil and includes a valve 39 and a relief valve 40. The valve 39 functions as a supplier and a controller of hydraulic oil. The valve 39 includes a pair of supply/exhaust ports 39e, 39f, an introduction port 39g and a drain port 39h. When the steering shaft 34 is rotated clockwise or counterclockwise, the valve 39 discharges hydraulic oil from one of the ports 39e, 39f, respectively. The amount of the discharged oil corresponds to the rotation amount of the steering shaft 34. At the same time, valve 39 receives oil from the other one of the ports 39e, 39f. The amount of the oil that the valve 39 receives is equal to the amount of oil that the valve 39 discharges. The valve 39 discharges returned oil from the drain port 39h.

Hydraulic oil is introduced to the valve 39 by the introduction port 39g. The introduction port 39g is connected to a passage 41, and the drain port 39h is connected to a passage 42. The relief valve 40 is connects the passages 41, 42 with each other. The relief valve 40 permits flow of hydraulic oil from the passage 41 to the passage 42, if the pressure in the passage 41 reaches a certain level, thereby preventing the oil pressure in the passage 41 from exceeding a predetermined pressure.

The passage 41 is connected to a hydraulic pump 44, which is driven by the engine 10. The passage 42 is connected to an oil tank 45. Therefore, when the relief valve 40 connects the passage 41 with the passage 42, oil from the relief valve 40 is returned to the tank 45. In this embodiment, the relief valve 40, the hydraulic pump 44 and the oil tank 45 constitute an oil supply device.

The port 39e is connected with the oil chamber R3 in the steering cylinder 24 by a passage 46. The port 39f is connected with the oil chamber R4 in the cylinder 24 by a passage 47. The passages 46, 47 are connected with each other by a bypass passage 48. The bypass passage 48 includes an electromagnetic control valve 49 and a throttle passage 50. The control valve 49 is a normally closed two-way switch valve that has two ports 49i, 49j. The control valve 49 is moved between a disconnection position 49a and a connection position 49b.

The control valve 49 includes an electromagnetic solenoid 51. When the solenoid 51 is not excited, the control valve 49 is moved to the disconnection position 49a and disconnects the port 49i from the port 49j. When the solenoid 51 is excited, the valve 49 is moved to the connection position 49b to connects the port 49i with the port 49j. If the control valve 49 is stuck at the connection position 49b due to a malfunction, the throttle passage 50 limits the amount of hydraulic oil flow in the bypass passage 48 thereby allowing the operator to steer the forklift 1 by the steering wheel 36.

A control unit 52 for exciting and de-exciting the solenoids 21, 51 based on signals from the sensors 32, 33, 37 is connected to the body frame 1a.

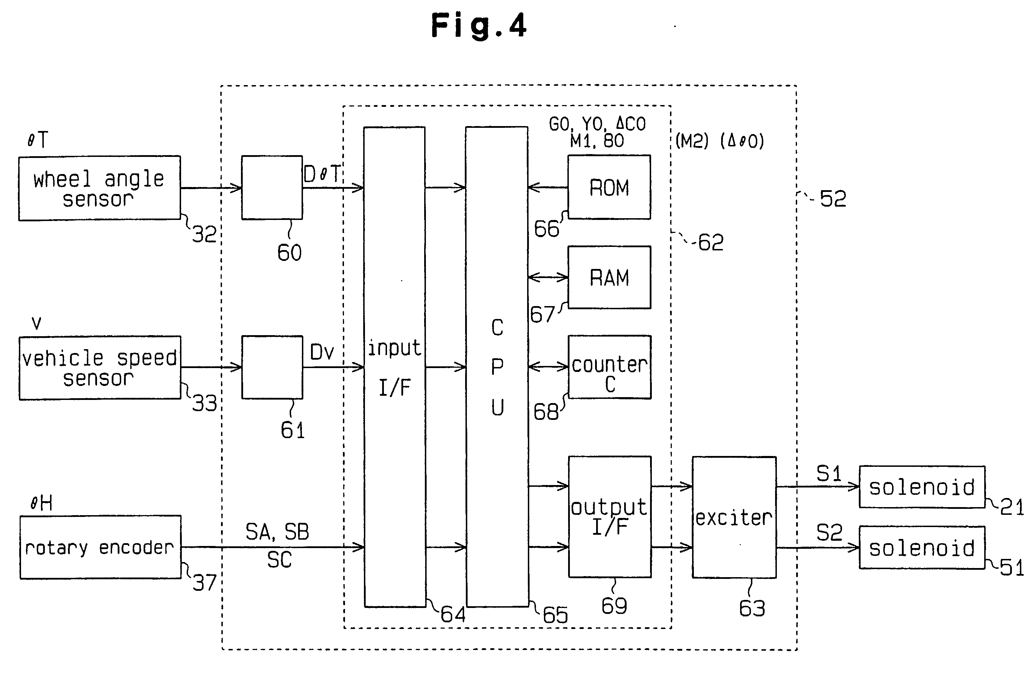

The electric configuration of the hydraulic power steering apparatus will now be described with reference to Fig. 4.

The wheel angle sensor 32, the vehicle speed sensor 33 and the rotary encoder 37 are electrically connected with the control unit 52. The electromagnetic solenoids 21, 51 are also electrically connected with the control unit 52.

The control unit 52 includes analog-to-digital converters 60, 61, a microcomputer 62 and an exciter 63. The microcomputer 26 functions as a steering control device, a correction determining device and a correction suppressing device. Further, the wheel angle sensor 32, the vehicle speed sensor 33 and the microcomputer 62 constitute a turning condition detecting device.

The wheel angle sensor 32 detects the rotation amount of the associated kingpin 28. The rotation amount of the king pin 28 corresponds to the wheel angle θT of the rear wheels 31. The sensor 32 then outputs a signal based on the detected rotation amount to the microcomputer 62 via the analog-to-digital converter 60. The vehicle speed sensor 33 detects the vehicle speed V based on the number of revolution of the differential ring gear 9 and outputs a detected speed signal to the microcomputer 62 via an analog-to-digital converter 61.

The rotary encoder 37 outputs pulse signals SA of a phase A and pulse signals SB of a phase B. Specifically the rotary encoder 37 outputs forty SA pulses and forty SB pulses during one turn of the steering wheel 35. There is a ninety-degree phase difference between the signals SA and the signals SB. The relationship between the signals SA and SB changes depending on the rotational direction of the steering wheel 35. That is, when the steering wheel 35 is rotated to the right, the phase of the signals SB is 90 degrees ahead of the phase of the signals SA. Contrarily, when the steering wheel 35 is rotated to the left, the phase of the signals SB is 90 degrees behind the phase of the signals SA.

When the steering wheel 35 is at the neutral position, the rotary encoder 37 outputs a referential position signal SC, which contains one pulse. The neutral position refers to a position of the steering wheel 35 when the wheel angle θT of the rear wheels 31 is zero degrees. The steering wheel 35 is rotated clockwise for steering the rear wheels 31 to the right, and is rotated counterclockwise for steering the rear wheels 31 to the left. In either case, the steering wheel 35 can be rotated approximately two and a half turns. Therefore, when rotated from the neutral position to the leftmost position or to the rightmost position, the steering wheel 35 passes the neutral position twice. In other words, the rotary encoder 37 outputs the referential position signals SC at five positions in the rotation range of the steering wheel 35.

The rear wheels 31 are pivoted between the left maximum wheel angle and the right maximum wheel angle. The wheel angle sensor 32 outputs wheel angle signals based on the angle of the rear wheels 31 to the analog-to-digital converter 60. The converter 60 converts the wheel angle signals into a wheel angle data DθT and sends the data DθT to the microcomputer 62. The data DθT is an 8-bit AD value (0 to 255). When the wheel angle θT of the rear wheels 31 is zero degrees, the value of the data DθT is one hundred twenty-eight. When the rear wheels are turned to the rightmost extent, the data DθT is two hundred fifty-five, and when the rear wheels are at their leftmost extent, the data DθT is zero.

The vehicle speed sensor 33 outputs vehicle speed signals, which correspond to the vehicle speed from zero to the maximum. The analog-to-digital converter 61 inputs the vehicle speed signal and converts the signal to vehicle speed data DV. The converter 61 sends the data DV to the microcomputer 62. When the vehicle speed is zero km per hour, the value of the vehicle speed data DV is zero, and when the vehicle speed is maximum the value of the vehicle speed data DV is two hundred fifty-five.

The exciter 63 outputs an excitation signal S1 to the solenoid 21 and an excitation signal S2 to the solenoid 51 based on control signals from the computer 62. The computer 62 includes an input interface 64, a central processing unit (CPU) 65, a read only memory (ROM) 66, a random access memory (RAM) 67, a steering counter 68 and an output interface 69.

The input interface 64 receives data from the analog-to-digital converters 60, 61 and the rotary encoder 37 and outputs the data to the CPU 65. The RAM 67 temporarily memorizes results of computations by the CPU 65. The steering counter 68 increments or decrements a counter value C based on control signals form the CPU 65. The output interface 69 outputs control signals from the CPU 65 to the exciter 63.

The ROM 66 stores a program for controlling the rear axle 12. When the vehicle is turning, a lateral acceleration Gs acts on the vehicle. In the rear axle control program, the lateral acceleration Gs is computed as a vehicle condition value based on the wheel angle θT detected by the sensor 32 and the vehicle speed V detected by the sensor 33. The computed lateral acceleration Gs is used to judge the stability of the vehicle during a turn. The rate of change of yaw rate $\Delta\omega / \Delta t$ is computed based on the wheel angle θT of the rear wheels 31 and the vehicle speed V. The computed rate of change of yaw rate $\Delta\omega / \Delta t$ is also used to judge the stability of the vehicle during a turn. The rear axle control program is a program for stabilizing the vehicle by restricting the tilting of the rear axle 12 when the vehicle is turning. The ROM 66 stores a reference value G0 of lateral acceleration and a reference value Y0 of the rate of change of the yaw rate. The reference values G0 and Y0 are used for determining whether the stability of the vehicle will be lowered.

The CPU 65 repeatedly executes the rear axle control at predetermined time intervals (for example, 10 milliseconds) based on the program stored in the ROM 66. The CPU 65 constantly outputs the excitation signals S1 to the solenoid 21 thereby keeping the valve 20 at the connection position 20b. This allows the cylinder 15 to operate. The CPU 65 computes the wheel angle θT of the rear wheels 31 based on the wheel angle data DθT. The CPU 65 then computes the turn radius r of the vehicle based on the computed wheel angle θ T. The CPU 65 also computes the vehicle speed V based on the vehicle speed data DV. The CPU 65 computes the lateral acceleration Gs of the vehicle based on the turn radius r and the vehicle speed V using the following equation (1).

$$Gs = V2 / r \qquad\qquad (1)$$

The CPU 65 judges whether the lateral acceleration Gs is greater than or equal to the reference value G0. If the lateral acceleration Gs is greater than the or equal to reference value G0, the CPU 65 determines that tilting of the body frame 1a with respect to the rear axle 12 needs to be restricted for stabilizing the vehicle and sends the excitation signal S1 to the solenoid 21. The signal S1 moves the valve 20 to the disconnection position 20a. The reference value G0 is determined based on the weight and the vertical position of the carried object for maximizing the stability of the vehicle during a turn.

The CPU 65 computes the rate of change of the yaw rate $\Delta\omega / \Delta t$ using the following equation (2) based on the wheel angle $\theta$T of the rear wheel 31 computed based on the wheel angle data D$\theta$T, the turn radius r computed based on the wheel angle $\theta$T and the vehicle speed V computed based on the vehicle speed data DV. The equation (2) is an approximation in which the vehicle speed V is assumed to be constant.

$$\Delta\omega/\Delta t = V \times \Delta(1/r)/\Delta T \qquad (2)$$

In the equation (2), $\Delta(1/r)$ is the amount of change of the inverse number(1/r) of the turn radius r during a predetermined time period $\Delta$T (for example, 10 milliseconds). The deviation $\Delta(1/r)$ is computed in the following manner. The RAM 67 stores a plurality of vehicle wheel angle data D$\theta$ T in the precedent cycles (the predetermined time period $\Delta$T is counted as one cycle). The CPU 65 reads data D$\theta$T of one cycle ago. The CPU 65 then computes the radius r based on the wheel angle $\theta$T of the rear wheels 31 computed based on the data D$\theta$T. Subsequently, the CPU 65 computes the inverse number of the turn radius r. The CPU 65 uses the equation $\Delta(1/r) = |1/r - 1/rb|$ for computing $\Delta(1/r)$. In the equation, 1/rb is the inverse number of the turn radius r one cycle (the predetermined time period $\Delta$T) ago.

The CPU 65 determines whether the computed rate $\Delta\omega / \Delta t$ of change of yaw rate is greater than or equal to the reference value Y0. If the rate $\Delta\omega / \Delta t$ is greater than or equal to the value Y0, the CPU 65 determines that the turning condition of the vehicle is affecting the stability of the vehicle and sets a flag FSL for restricting the tilting of the rear axle 12 to one. At the same time, the CPU 65 stops sending excitation signals S1 to the solenoid 21 thereby moving the valve 20 to the disconnection position 20a. If the rate $\Delta\omega / \Delta t$ is smaller than the reference value Y0, the CPU 65 determines that the turning condition of the vehicle does not affect the stability of the vehicle and sets the flag FSL to zero. The CPU 65 keeps sending an excitation signal S1 to the solenoid 21 to maintain the valve 20 at the connection position 20b. This allows the rear axle 12 to tilt with respect to the body frame 1a. The reference value Y0 of the rate $\Delta\omega / \Delta$ of change of yaw rate is determined based on road tests or is theoretically calculated.

The ROM 66 also stores a program for detecting the angle $\theta$H of the steering wheel 35. The CPU 65 detects the rotating direction and the actual angle $\theta$H of the steering wheel 35 based on changes in the pulse signals SA, SB and SC from the rotary encoder 37.

The CPU 65 judges that the steering wheel 35 is at the neutral position every time it receives the reference position signal SC from the rotary encoder 37. At this time, the CPU 65 executes an interrupt for setting the counter value C in the steering counter 68 to eighty. The CPU 65 inputs the pulse signals SA, SB of two phases A, B from the rotary encoder 37. The CPU 65 executes the steering angle detection every time either one of the pulse signals SA, SB changes its level. The steering wheel angle detection is an interrupt.

The CPU 65 also judges the rotation direction of the steering wheel 35 based on the pulse signals SA, SB. When the steering wheel 35 is rotated to the right, the CPU 65 sets a steering direction flag FHD to one and increments the counter value C of the steering count 68. Contrarily, when the steering wheel 35 is rotated to the left, the CPU 65 sets the flag FHD to zero and decrements the counter value C. If the counter value C is one hundred fifty-nine, the CPU 65 increments the value C to zero. If the counter value C is zero, the CPU 65 decrements the counter value C to one hundred fifty-nine.

In other words, the counter value C of eighty, at which the CPU 65 receives the referential position signal SC, is used as a marker. When the steering wheel 35 is rotated to the right, the CPU 65 increments the counter value C from eighty every time either of the pulse signals SA, SB changes its level. While the steering wheel 35 is rotated 180 degrees to the right, the CPU 65 increments the counter value C from eighty-one to one hundred fifty-nine. When the steering wheel 35 is rotated to the left, the CPU 65 decrements the counter value C from eighty every time either of the pulse signals SA, SB changes its level. While the steering wheel 35 is rotated 180 degrees to the left, the CPU 65 decrements the counter value C from seventy-nine to zero.

When the steering wheel 35 is rotated to the right by 180 degrees from the neutral position, the CPU 65 sets the counter value C to zero again. If the steering wheel 35 is further rotated to the right by 360 degrees, the CPU 65 increments the counter value C from zero to one hundred fifty-nine. Therefore, if the steering wheel 35 is rotated to the right from the neutral position by 360 degrees, the counter value C becomes eighty again. Likewise, if the steering wheel 35 is rotated to the left by 180 degrees and an angle corresponding to one counter value, the CPU 65 sets the counter value to one hundred fifty-nine. If the steering wheel 35 is further rotated to the left by 360 degrees, the CPU 65 decrements the counter value C from one hundred fifty-nine to zero. Therefore, if the steering wheel 35 is rotated to the left from the neutral position by 360 degrees, the counter value becomes eighty again. In this manner, the counter value C is always set to eighty every time the position of the steering wheel 35 matches the neutral position. In other words, the angle of the steering wheel 35 is always detected as an angle between -180 degrees and 180 degrees.

The ROM 66 stores a program for correcting the angle of the steering wheel 35. First, the rotary encoder 37 detects the actual angle $\theta H$ of the steering wheel 35 and the wheel angle sensor 32 detects the wheel angle $\theta T$ of the rear wheels 31. Based on the detected values $\theta H$ and $\theta T$, the CPU 65 computes the actual angle $\theta H$ of the steering wheel 35 and a target angle $\theta g$. The target angle $\theta g$ is a target value of the steering wheel 35 based on the wheel angle $\theta T$ of the rear wheels 31. The correction is executed only when the steering wheel 35 is being rotated in a direction that reduces the discrepancy.

A lateral acceleration Gs is computed based on the vehicle speed V detected by the vehicle speed sensor 33 and on the wheel angle $\theta T$ of the rear wheels 31. The of the steering wheel angle is not corrected when the lateral acceleration Gs exceeds the predetermined value G0. The reference value G0 is the value of the lateral acceleration Gs at which the operator concentrates on the manipulation of the steering wheel 35, that is, when the vehicle is turning with a short radius of turn or when the vehicle is turning at a relatively high speed. In this state, the steering wheel angle correction tends to disturb the operator. Further, if the difference $\Delta\theta$ is within an allowable range, the steering wheel angle is not corrected.

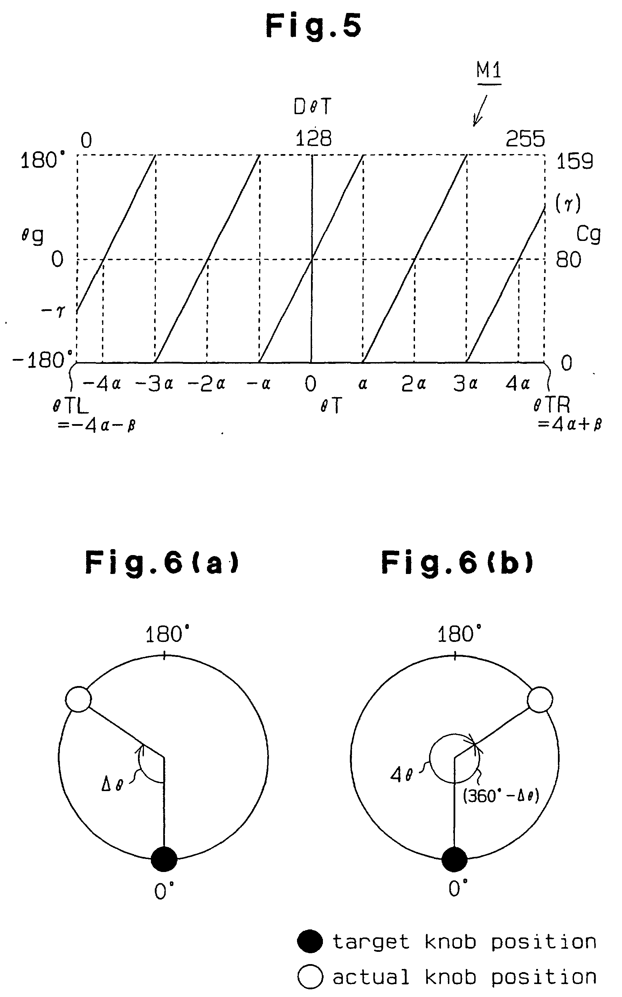

The ROM 66 stores a map M1 shown in Fig 5. The CPU 65 uses the map M1 for computing the target steering wheel angle $\theta g$ based on the wheel angle $\theta T$ of the rear wheels 31. The target angle $\theta g$ of the steering wheel 35 is an angle that corresponds to the wheel angle $\theta T$ of the rear wheels 31. When the wheel angle $\theta T$ is zero degrees, the steering wheel 35 is at the neutral position and the knob 36 is located at a predetermined position. The horizontal axis of the map M1 represents rear wheel angle data $D\theta T$ (0 to 255), which correspond to the wheel angle $\theta T$ of the rear wheels 31 in the range between $\theta TL$ to $\theta TR$. The vertical axis represents target counter values Cg (0 to 159) corresponding to the target angle $\theta g$ (- 180 degrees to + 180 degrees) of the steering wheel 35

The target steering wheel angle $\theta g$ is represented by an angle from the neutral position or from a position of the steering wheel 35 that matches the neutral position. Within a range of the wheel angle $\theta T$ (-$\alpha$ to +$\alpha$) of the rear wheels 31, the target steering wheel angle $\theta g$ ranges between -180 degrees to +180 degrees. The steering wheel 35 is rotatable from the neutral position by a little less than two and a half turns to the right and to the left, respectively. Therefore, when the wheel angle $\theta T$ of the rear wheels 31 is either -4$\alpha$, -2$\alpha$, +2$\alpha$ or +4$\alpha$, the steering wheel 35 is at a position that matches the neutral position. A range of the wheel angle $\theta T$ from +$\alpha$ to +3$\alpha$ corresponds to a range of the target steering wheel angle $\theta g$ from -180 degrees to +180 degrees. A range of the wheel angle $\theta T$ from +3$\alpha$ to +4$\alpha$+$\beta$ corresponds to a range of the target steering wheel angle $\theta g$ from -180 degrees to zero+$\gamma$ degrees. A position of the steering wheel 35 that corresponds to the vehicle wheel angle of +4$\alpha$+$\beta$ is the maximum position of the steering wheel 35 when rotated to the right.

Likewise, a range of the wheel angle $\theta T$ from -3$\alpha$ to -$\alpha$ corresponds to a range of the target steering wheel angle $\theta g$ from -180 degrees to +180 degrees. A range of the wheel angle $\theta T$ from -4$\alpha$-$\beta$ to -3$\alpha$ corresponds to a range of the target steering wheel angle $\theta g$ from -180 degrees to zero +$\gamma$ degrees. A position of the steering wheel 35 that corresponds to the vehicle wheel angle of -4$\alpha$-$\beta$ is the maximum position of the steering wheel 35 when rotated to the left.

The ROM 66 stores a counter value of eighty, which is used to determine the rotation direction of the steering wheel 35 during a steering wheel angle correction. The ROM 66 also stores an allowable value $\Delta C0$. The allowable value $\Delta C0$ is used for determining whether the angle discrepancy $\Delta\theta$ between the actual steering wheel angle $\theta H$ and the target steering wheel angle $\theta g$ requires a steering wheel angle correction.

The CPU 65 repeatedly executes the steering wheel angle correction based on a program stored in the ROM 66, for example, every time the CPU 65 executes the rear axle control. The CPU 65 refers to the map M1 and uses the wheel angle data DOT for computing a counter value Cg of a target steering wheel angle $\theta g$, which corresponds to the current wheel angle $\theta T$ of the rear wheels 31 (S210). The CPU 65 computes the difference $\Delta C$ between the target counter value Cg and the counter value C that corresponds to the actual steering wheel angle $\theta H$ (S220). The difference $\Delta C$ is represented by an equation $\Delta C=|C-Cg|$. The CPU 65 then judges whether the difference $\Delta C$ is smaller than the counter value of eighty, which corresponds to 180 degrees of the steering wheel angle.

The minimum rotation amount of the steering wheel 35 that is required for eliminating the difference $\Delta C$, that is, for matching the actual steering wheel angle $\theta H$ with the target steering wheel angle $\theta g$, is referred to as correction amount Cc. If the difference $\Delta C$ is equal to or less than eighty, the CPU 65 sets the correction amount Cc equal to |C-Cg| (S240). That is, when the angle discrepancy $\Delta\theta$ between the actual knob position corresponding to the actual steering wheel angle $\theta H$ and the target knob position corresponding to the target steering wheel angle $\theta g$ is less than 180 degrees as shown in Fig. 6(a), the difference $\Delta C$ is less than eighty. Therefore, the CPU 65 judges that the actual steering wheel angle $\theta H$ will be matched with the target steering wheel angle $\theta g$ by the counter value $\Delta\theta$, which corresponds to the difference |C-Cg|.

If the difference AC is equal to or less than eighty, the CPU 65 judges whether the counter value C is less than the target counter value Cg (S250). If the counter value C is less than the target counter value Cg, the CPU 65 determines that rightward rotation of the steering wheel 35 by the correction amount Cc will eliminate the difference ΔC and sets a correction direction flag FCD to one (S270). Contrarily, if the counter value C is greater than the target counter value Cg, the CPU 65 judges that leftward rotation of the steering wheel 35 by correction amount Cc eliminates the difference ΔC and sets the correction direction flag FCD to zero (S290).

If the difference ΔC is greater than eighty, the CPU 65 computes the correction amount Cc using an equation Cc=160 - |C-Cg|. That is, when the difference between the actual knob position corresponding to the actual steering wheel angle θH and the target knob position corresponding to the target steering wheel angle θg is greater than 180 degrees, the difference ΔC is greater than eighty. Therefore, the CPU 65 judges that the actual steering wheel angle θH will be matched with the target steering wheel angle θg by the counter value (160- |C-Cg |), which corresponds to an angle (360° -Δθ).

When the difference ΔC is greater than eighty, the CPU 65 judges whether the angle counter value C is less than the target angle counter value Cg (S250). If the angle counter value C is less than the target counter value Cg, the CPU 65 judges that rotating the steering wheel 35 to the left by the correction amount Cc will zero the difference ΔC and sets the compensation direction flag FCD to zero (S290). On the other hand, if the angle counter value C is greater than the target counter value Cg, the CPU 65 judges that rotating the steering wheel 35 to the right by the correction amount Cc will zero the difference ΔC and sets the compensation direction flag FCD to one (S270).

The CPU 65 refers to the tilting restriction flag FSL, which is set in the rear axle control, for judging whether the state of the vehicle permits a steering wheel angle correction (S280). That is, if the lateral acceleration Gs is greater than the reference value G0, the vehicle is performing an acute turn or is turning at a high speed and the operator is concentrating on the steering operation. Therefore, if the flag FSL is set to one, the CPU 65 judges that the turning condition of the vehicle does not permit the steering wheel angle correction. In this case, the CPU 65 stops the excitation signal S2 to the solenoid 51, which moves the valve 49 to the disconnection position 49a (S320). On the other hand, if the flag FSL is set to zero, the CPU 65 judges that the turning condition of the vehicle permits the steering wheel angle correction. In this case, the CPU 65 outputs the excitation signal S2 to the solenoid 51 thereby moving the valve 49 to the connection position 49b (S310).

The CPU 65 judges whether the difference ΔC is less than the allowable value ΔCO (S290). If the difference ΔC is less than the allowable value ΔCO, the CPU 65 judges that the angle difference Δθ is within the allowable range and that a steering wheel angle correction is not needed. The CPU 65 therefore stops the excitation signal S2 to the solenoid 51, which moves the valve 49 to the disconnection position 49a (S320).

Further, the CPU 65 judges whether the steering direction flag FHD matches with the correction direction flag FCD (S300). If the flags FHD and FCD match, the CPU 65 judges that rotating the steering wheel 35 in the current direction will eliminate the angle discrepancy Δθ by the minimum rotation amount of the steering wheel 35. The CPU 65 then outputs the excitation signal S2 to the solenoid 51 thereby moving the valve 49 to the connection position 49b (S310). If the flags FHD and FCD do not match, the CPU 65 judges that rotating the steering wheel 35 in the current direction will not eliminate the angle difference Δθ by the minimum rotation amount of the steering wheel 35. In this case, the CPU 65 stops the excitation signal S2 to the solenoid 51, which moves the valve 49 to the disconnection position 49a (S320).

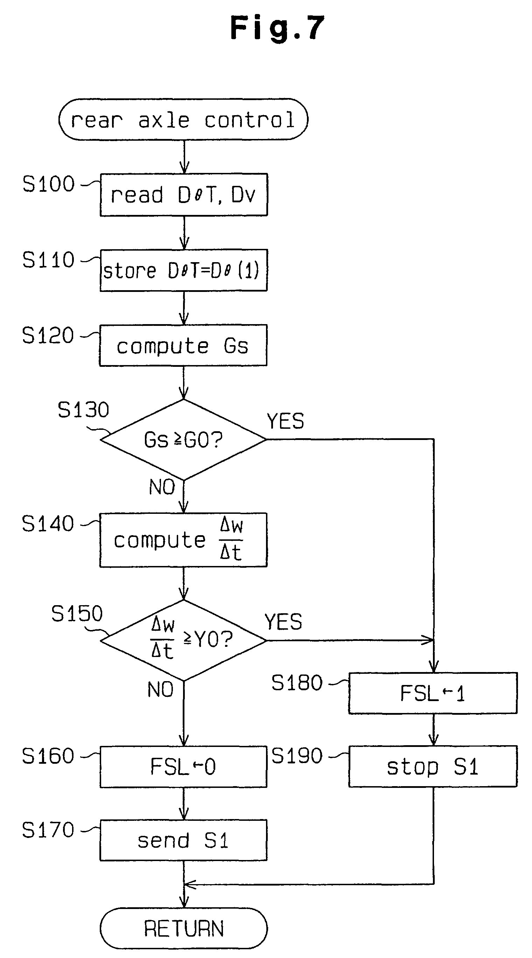

The operation of the above described power steering apparatus used for an industrial vehicle will now be described with reference to flowcharts of Figs. 7 to 10.

When the engine 10 is started, the control unit 52 moves the electromagnetic valve 20 from the disconnection position 20a to the connection position 20b. This allows the rear axle 12 to tilt with respect to the body frame 1a in accordance with the traveling state of the vehicle.

If the steering wheel 35 is rotated, the steering unit 38 supplies hydraulic oil to the steering cylinder 24. Specifically, the oil is provided to one of the oil chambers R3 or R4 that corresponds to the rotating direction of the steering wheel 35. The amount of the supplied oil represents the rotation amount of the steering wheel 35. Since the valve 49 is at the disconnection position 49a at this time, hydraulic oil is only supplied to one of the oil chambers R3 (R4), and oil in the other chamber R4 (R3) is drained from the chamber R4(R3). This moves the steering rod 27 in the rotating direction of the steering wheel 35 by an amount corresponding to the rotated amount of the steering wheel 35. In other words, the rear wheels 31 are steered by a wheel angle θT, which corresponds to the actual steering wheel angle θH.

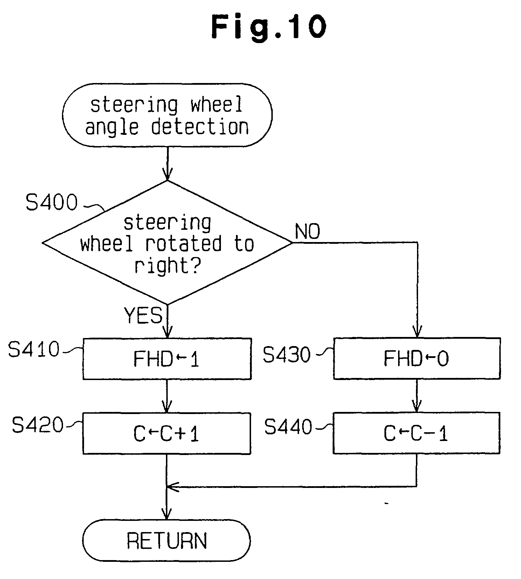

As the steering wheel 35 is rotated, the rotary encoder 37 outputs pulse signals SA, SB of two phases A, B and reference position signals SC. Upon reception of every reference position signal SC, the CPU 65 resets the counter value C of the steering counter 68 to eighty. The CPU 65 detects the steering wheel angle every time the levels of the signals SA, SB change. The flowchart of Fig. 10 shows the steering wheel angle detection process.

At step (steps are designated with an "S") S400, the CPU 65 determines the rotating direction of the steering wheel 35 based on the pulse signals SA, SB of two phases A, B. If the CPU 65 judges that the steering wheel 35 is being rotated to the right, the CPU 65 sets the steering direction flag FHD to one at S410 and moves to S420. At S420, the CPU 65 increments the counter value C of the steering counter 68 and suspends the current process.

If the CPU 65 judges that the steering wheel 35 is being rotated to the left at S400, the CPU 65 sets the steering direction flag FHD to zero at S430 and moves to S440. At S440, the CPU 65 decrements the counter value C of the steering counter 68 and suspends the current process.

While the vehicle is moving, the CPU 65 repeatedly executes the rear axle control shown in the flowchart of Fig. 7. In the rear axle control, the CPU 65 reads the wheel angle data DθT and the vehicle speed data DV at S100. At S110, the CPU 65 memorizes the data DθT as a wheel angle data Dθ(1) of the current routine. Then at S120, the CPU 65 computes the lateral acceleration Gs using the equation (1) based on the wheel angle data DθT and the vehicle speed data DV. In S130, the CPU 65 judges whether the computed lateral acceleration Gs is greater than the determination value G0.

If the lateral acceleration Gs is less than the determination value G0, the CPU 65 computes the rate of change of the yaw rate $\Delta\omega / \Delta t$ using the equation (2) based on the wheel angle data DθT and the vehicle speed data DV at S140. At S150, the CPU 65 judges whether the computed rate of change $\Delta\omega/\Delta t$ is greater than or equal to the determination value Y0. If the rate of change $\Delta\omega / \Delta$ is less than the determination value Y0, the CPU 65 sets the tilting restriction flag FSL to zero at S160. Then at S170, the CPU 65 outputs the excitation signal S1 to the solenoid 21. This moves the valve 20 to the connection position 20b thereby activating the hydraulic cylinder 15.

If the lateral acceleration Gs and the changes in the yaw rate ω do not affect the stability of the vehicle, tilting of the rear axle 12 relative to the body frame 1b is permitted not only when the vehicle is traveling in a straight line, but also when it is turning.

If the lateral acceleration Gs is greater than the determination value G0 at S130, the CPU 65 sets the tilting restriction flag FSL to one and moves to S190. At S190, the CPU 65 stops sending excitation signals S1 to the solenoid 21 thereby moving the valve 20 to the disconnection position 20a.

While the vehicle is turning, if the lateral acceleration Gs is greater than the determination value G0, the tilting of the rear axle 12 relative to the body frame 1a is prohibited for stabilizing the vehicle.

Also, if the rate of change of the yaw rate $\Delta\omega / \Delta t$ is determined to be greater than the determination value Y0 at S150, the CPU 65 sets the tilting restriction flag FSL to one at S180 and moves to S190. At S190, the CPU 65 stops sending the excitation signals S1 to the solenoid 21 thereby moving the valve 20 to the disconnection position 20a.

If the rate of change of the yaw rate $\Delta\omega / \Delta t$ is greater than or equal to the determination value Y0, the tilting of the rear axle 12 is prohibited for stabilizing the vehicle.

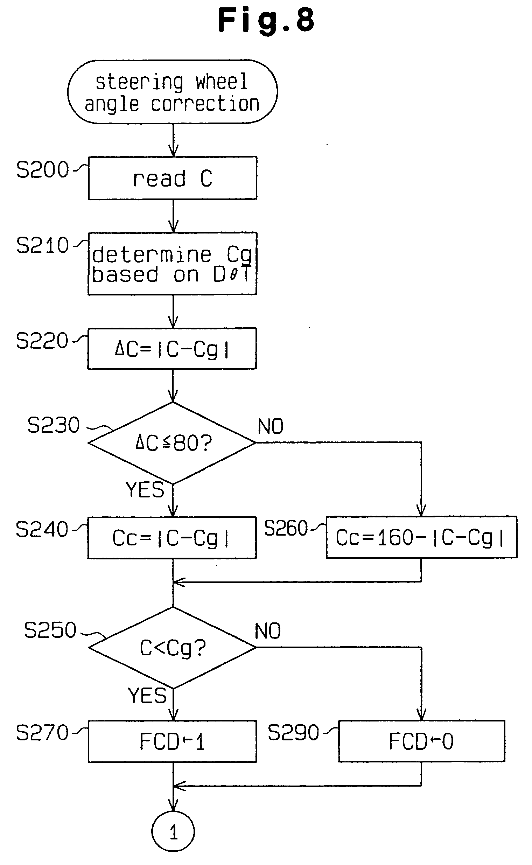

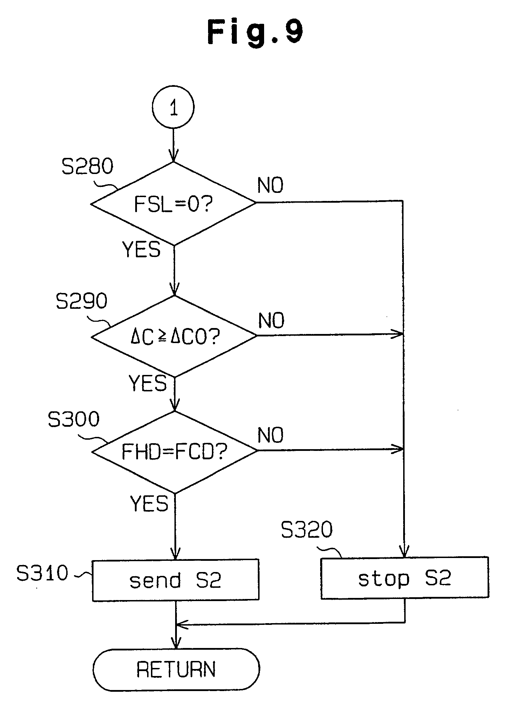

While the vehicle is moving, the CPU 65 executes the steering wheel angle correction at predetermined intervals. This process is shown in the flowcharts of Figs. 8 and 9. At S200, the CPU 65 reads the steering counter value C, which corresponds to the actual angle θH of the steering wheel 35. At S210, the CPU 65 obtains a target steering counter value Cg using a map M1. The obtained value Cg corresponds to the wheel angle data DθT, which is inputted to the CPU 65 in the rear axle control.

At S220, the CPU 65 computes the difference ΔC between the counter value C and the target counter value Cg ($\Delta C = | C\text{-}Cg |$). The CPU 65 judges whether the difference ΔC is less than or equal to the predetermined value eighty at S230. If the difference ΔC is less than or equal to the eighty, the CPU 65 moves to S240. At S240, the CPU 65 obtains the correction amount Cc by the equation Cc=|C-Cg| and moves to S250. If the difference ΔC is greater than eighty at S230, on the other hand, the CPU 65 moves to S260. At S260, the CPU 65 obtains the correction amount Cc by the equation Cc=160-|C-Cg| and moves to S250.

At S250, the CPU 65 judges whether the counter value C is less than the target counter value Cg. If the counter value C is smaller than the target counter value Cg, the CPU 65 moves to S270. At S270, the CPU 65 sets the correction direction flag FCD to one and moves to S280. If the counter value C is greater than the target counter value Cg, the CPU 65 moves to S290. At S290, the CPU 65 sets the correction direction flag FCD to zero and moves to S280.

At S280, the CPU 65 judges whether the tilting restriction flag FSL is set at zero. If the flag FSL is set to zero, the CPU 65 moves to S290. At S290, the CPU 65 judges whether the difference ΔC is greater than or equal to the allowable value ΔCO. If ΔC is greater than or equal to ΔCO, the CPU 65 moves to S300 and judges whether the steering direction flag FHD matches the correction direction flag FCD. If the flags FHD and FCD match, the CPU 65 moves to S310. At S310, the CPU 65 sends the excitation signal S2 to the solenoid 51 thereby moving the valve 49 to the connection position 49b. The CPU then suspends the current process.

Therefore, when the lateral acceleration Gs does not affect the stability of the vehicle, the steering wheel correction is executed if the angle discrepancy Δθ between the actual steering wheel angle θH and the target steering wheel angle θg is equal to or greater than the determination value. At this time, the steering wheel angle is actually corrected if the steering wheel 35 is being rotated in a direction that eliminates the difference Δθ by the minimum rotation.

If the tilting restriction flag FSL is one in S280, on the other hand, the CPU 65 moves to S320 and stops sending the excitation signal S2 to the solenoid 51 thereby moving the valve to the disconnection position 49a. The CPU 65 then suspends the current process.

As described above, tilting of the rear axle 12 is restricted when the lateral acceleration Gs is judged to affect the stability of the vehicle. In this state, the steering wheel angle correction is also inhibited.

If the difference $\Delta C$ is less than the allowable value $\Delta CO$, the CPU 65 executes S320. Therefore, when the angle discrepancy $\Delta\theta$ is within the allowable range, the steering wheel angle is not corrected.

If the flags FHD and FCD do not match at S300, the CPU 65 executes S320. In other words, if the steering wheel 35 is not rotated in a direction that eliminates the angle discrepancy $\Delta\theta$ by the minimum rotation amount, the steering wheel angle is not corrected.

The above described hydraulic steering apparatus has the following advantages.

(a) A vehicle condition value (the lateral acceleration Gs) is detected based on the turning condition of the vehicle. If the lateral acceleration Gs is equal to or greater than the determination value G0, a correction suppressing device (microcomputer 62) causes a steering control device (microcomputer 62) to stop actuating the electromagnetic valve 49. As a result, steering wheel angle correction is prohibited and the rear wheels 31 are interlocked with the steering wheel 35.

In other words, steering wheel angle correction is prohibited when the rear wheels 31 need to be locked with the steering wheel 35. As a result, the steering angle correction is not executed if the stability of the vehicle would be affected by the steering angle correction.

(b) If the lateral acceleration Gs is equal to or greater than the determination value G0, the vehicle is performing an acute or fast turn, and the operator must concentrate on the steering operation. In these states, steering angle correction tends to disturb operators. However, the apparatus of this embodiment prohibits the compensation in such a state.

If the wheel angle $\theta T$ is small, the steering angle correction is executed even if the vehicle speed V is high. Also, if the vehicle speed V is low, the steering angle correction is executed even if the wheel angle $\theta T$ is great. Therefore, an angle discrepancy is corrected in a wide range of situations.

(c) When the lateral acceleration Gs is greater than the determination value G0, the rear axle controller restricts tilting of the rear axle 12 relative to the body frame 1a. The rear axle controller and the hydraulic power steering apparatus share the vehicle speed sensor 33, the wheel angle sensor 32 and the control unit 52. Therefore, the above embodiment reduces the number of parts compared to the case where each of the rear axle controller and the power steering apparatus has its own sensors and control unit.

(d) The electromagnetic control valve 49 is normally closed. Thus, the control valve 49 is located at the disconnection position 49a when the controller 52 malfunctions. In this state, hydraulic oil flowing to the steering cylinder 24 is not bypassed. In other words, steering wheel angle correction is prohibited. Therefore, even if the controller 52 malfunctions, control of the rear wheels 31 is maintained.

(e) The actual steering wheel angle $\theta H$ is always detected as an angle from the neutral position or from a position of the steering wheel 35 that matches the neutral position. The target steering wheel angle $\theta g$ is also detected as an angle from the neutral position or from a position of the steering wheel 35 that matches the neutral position. The steering wheel angle correction eliminates the angle discrepancy $\Delta\theta$ between the actual steering wheel angle $\theta H$ and the target steering wheel angle $\theta g$. Therefore, if the actual angle discrepancy $\Delta\theta$ is greater than one or more turns of the steering wheel 35, that is, greater than an integer number of rotations of the steering wheel 35, the angle corresponding to the interger number of rotation is canceled. Thus, the angle discrepancy $\Delta\theta$ to be corrected is always less than one turn of the steering wheel 35. In other words, when the steering wheel angle is corrected, racing the steering wheel 35, during which the steering wheel 35 is not locked with the rear wheels 31, is always less than one turn of the steering wheel 35. This improves the steering wheel control.

(f) When the angle discrepancy $\Delta\theta$ between the actual steering wheel angle $\theta H$ and the target steering wheel angle $\theta g$ exceeds $180°$ , the angle to be corrected is $(360° - \Delta\theta)$. Therefore, when the steering wheel correction is executed, the' steering wheel angle is always corrected by an angle smaller than $180°$ .

(g) In the embodiment Figs. 1-10, the present invention is embodied in the hydraulic power steering apparatus that pivots the rear wheels 31 of the forklift 1. If judged to affect the stability of the forklift 1, the steering wheel angle correction is not executed. This improves the stability of the forklift 1.

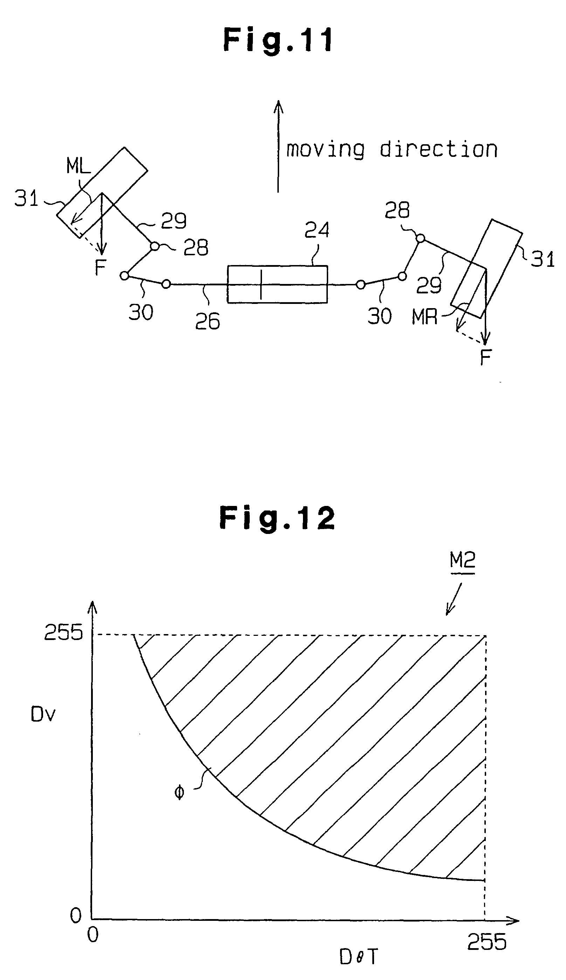

A hydraulic power steering apparatus of a forklift according to another embodiment of the present invention will now be described with reference to Figs. 11 to 13.

The forklift of this embodiment has substantially the same construction as that of the embodiment of Figs. 1-10. However, the forklift of Fig. 11-13 does not execute rear axle control.

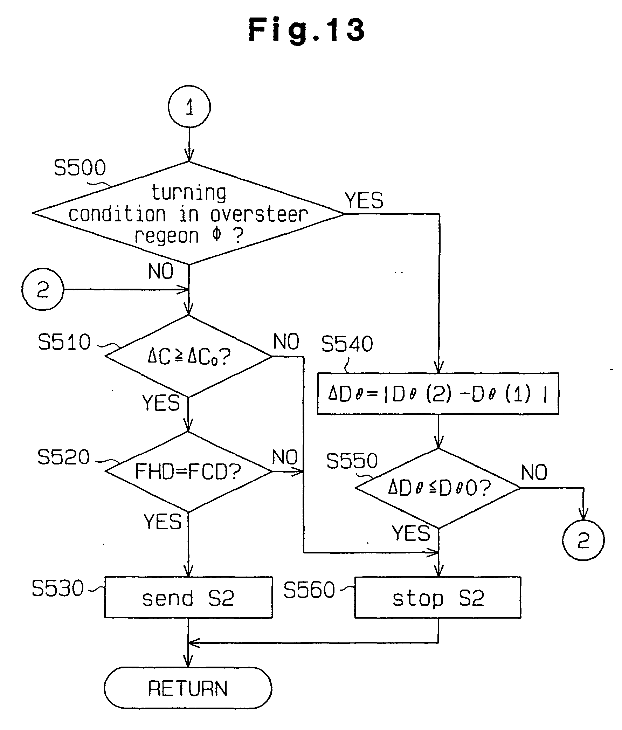

In the embodiment of Fig. 1-10, the lateral acceleration Gs is detected in the rear axle control. The lateral acceleration Gs is used as a value that represents the turning condition of the vehicle. The steering wheel angle correction is inhibited if the lateral acceleration Gs is greater than a predetermined value. However, in this embodiment, the vehicle speed V and the wheel angle θT of the rear wheels 31 are used as values that represent the turning state the vehicle. The steering wheel angle correction is inhibited based on the vehicle speed V and the wheel angle θT of the rear wheels 31. Therefore, in this embodiment, the rear axle control is not executed, and the steps S280-S320 of Fig. 9 are replaced with steps S500 to S560 of Fig. 13. The differences from the embodiment of Figs. 1-10 will mainly be discussed below, and like or the same reference numerals are given to those components that are like or the same as the corresponding components of Figs. 1-10.

The ROM 66 stores a program for executing the steering wheel angle correction. In this steering wheel angle correction, the vehicle speed V and the wheel angle θT of the rear wheels 31 are used as vehicle condition values. The angle of the steering wheel 35 is corrected based on the values V and θT. If the oil chambers R3 and R4 of the steering cylinder 24 are communicated in this state, the rear wheels 31 can be excessively steered (to an oversteer position) by the resistance of the road surface acting on the wheels 31. In this state, steering wheel correction is not executed.

When the rear wheels 31 are steered to the right as shown in Fig. 11 for turning the vehicle to the left, each rear wheel 31 receives resistance F from the road surface. The force F generates moments MR and ML. The moment MR acts on the king pin 28 of the right rear wheel 31 and rotates this king pin 28 clockwise. The moment ML acts on the king pin 28 of the left rear wheel 31 and rotates this king pin 28 counterclockwise. In this state, the right vehicle wheel 31 is positioned outside of the radius of the turn. Therefore, the moment MR acting on the right rear wheel 31 is greater than the moment ML acting on the left rear wheel 31. If the rear wheels 31 are not fixed by the steering cylinder 24, the resultant of the moments MR, ML oversteers the wheels 31.

If the steering unit 38 is supplying a relatively great amount of hydraulic oil to the steering cylinder 24, the pressure of the hydraulic oil prevents the piston 26 from being moved by the resultant of the moments MR, ML. In other words, the rear wheels 31 are not moved to an oversteered position. If the steering unit 38 is supplying a relatively small amount of hydraulic oil to the cylinder 24, the pressure of the oil is not enough to prevent the movement of the piston 26. In this state, the wheels 31 are moved to an oversteer position by the resultant of the moments MR, ML. Hence, in this embodiment, the steering wheel angle correction is inhibited when the turning condition of the vehicle is such that the correction will move the rear wheels 31 to an oversteer position.

The ROM 66 stores a map M2 shown in Fig. 12 for judging whether the turning condition of the vehicle is likely to move the rear wheels 31 to an oversteer position. The map M2 includes an oversteer region Φ, which is defined by the vehicle speed data DV and the wheel angle data DθT. The turning condition of the vehicle is represented by a point, which corresponds to a value of the data DV and a value of the data DθT in the map M2. If the turning condition (a point on the map M2) is in the oversteer region Φ, the rear wheels 31 are likely to be moved to an oversteer position. If the turning state is out of the region Φ, the rear wheels 31 are unlikely to be moved to an oversteer position. The region Φ is determined by theoretical computation or by experiments.

The ROM 66 also stores a determination value Dθ0. The value Dθ0 is used to determine whether the rear wheels 31 are actually in an oversteer position when the turning condition of the vehicle is in the oversteer region Φ. If the steering wheel 35 is rotated by a great amount, the steering unit 38 supplies a relatively great amount of hydraulic oil to the steering cylinder 24. In this state, the pressure of the supplied oil restricts the movement of the steering cylinder 24. Therefore, even if the turning condition is in the oversteer region Φ, the rear wheels 31 are not moved to an oversteer position. On the other hand, if the amount of oil supplied to the steering cylinder 24 is small, the moving of the steering cylinder 24 is not restricted. Therefore, the rear wheels 31 are moved to an oversteer position.

The determination value Dθ0 represents the critical value of hydraulic oil amount that prevents the rear wheels 31 from being moved to an oversteer position when the turning condition of the vehicle is in the oversteer region Φ. That is, if the amount of hydraulic oil supplied to the steering cylinder 24 from the steering unit 38 is equal to or greater than the value Dθ0, the pressure of the supplied oil restricts the movement of the steering cylinder 24. In other words, when the amount of hydraulic oil is equal to or greater than the value Dθ0, the rear wheels 31 are not moved to an oversteer position even if the turning condition of the vehicle is in the over steer region Φ. The amount of oil supplied to the steering cylinder 24 from the steering unit 38 corresponds to the pivoting speed of the rear wheels 31. Therefore, the determination value Dθ0 is determined in accordance with the pivoting speed of the rear wheels 31.

The CPU 65 repeatedly executes the correction of the angle of the steering wheel 35 based on a program stored in the ROM 66 at every predetermined cycle. The CPU 65 determines whether the turning condition of the vehicle is in the oversteer region Φ (S500). If the turning condition is not in the region Φ, the CPU 65 judges that a steering wheel angle correction will not move the rear wheels 31 to an oversteer position. Further, if the counter value difference ΔC is equal to or greater than the allowable value ΔC0 (S510), and if the value of the rotation direction flag FHD matches the value of the correction direction flag FCD (S520), the CPU 65 sends an excitation signal S2 to the solenoid 51 thereby moving the valve 49 to the connection position 49b (S530).

If the turning condition, which is determined by the vehicle speed V and the angle θ of the rear wheels 31, is in the oversteer region Φ, the CPU 65 judges that a steering wheel angle correction can move the rear wheels 31 to an oversteer position. In this case, the CPU 65 computes the difference ΔDθ between the wheel angle data DθT (Dθ(1)) of the current routine and the wheel angle data DθT(Dθ(2)) of the previous routine (S540). The CPU 65 judges whether the difference ΔDθ is less than or equal to the determination value Dθ0 (S550).

If the difference ΔDθ is equal to or less than the determination value Dθ0, the CPU 65 judges that the steering wheel 35 is being slowly rotated and a relatively small amount of hydraulic oil is being supplied to the steering wheel 24. Accordingly, the CPU 65 judges that the rear wheel 31 is likely to be moved to an oversteer position. The CPU 65 thus stops sending excitation signal S2 to the solenoid 51 for maintaining the valve 49 at the disconnection position 49a (S560). In other words, the CPU 65 does not execute the correction of the steering wheel angle.

Contrarily, if the difference ΔDθ is greater than the determination vale Dθ0, the CPU 65 judges that a relatively great amount of hydraulic oil is being supplied to the steering cylinder 24. Accordingly, the CPU 65 judges that the rear wheels 31 will not be moved to an oversteer position despite the turning condition of the vehicle being in the oversteer region Φ.

The operation of the above described power steering apparatus in an industrial vehicle will now be described with reference to the flowchart of Fig. 13.

At S250, the CPU 65 judges whether the counter value C is smaller than the target counter value Cg. The CPU 65 then sets the value of the correction direction flag FCD at S270 or S290 depending on the determination of S250, and moves to S500. At S500, the CPU 65 determines whether the turning condition of the vehicle is in the oversteer region Φ. If the turning condition is not in the region Φ, the CPU 65 moves to S510. At S510, the CPU 65 judges whether the difference ΔC is greater than or equal to the allowable value ΔCO.

If the difference ΔC is greater than or equal to the allowable value ΔC0, the CPU 52 moves to S520 and judges whether the rotation direction flag FHD matches the correction direction flag FCD. If the flags FHD and FCD match, the CPU 65 sends an excitation signal S2 to the solenoid 51 thereby moving the valve 49 to the connection position 49b. The CPU 65 then suspends the current process. In this manner, if the rear wheels 31 are not moving to an oversteer position, the angle of the steering wheel 35 is corrected.

If the turning condition of the vehicle is in the oversteer region Φ at S500, the CPU 65 moves to S540. At S540, the CPU 65 computes the difference ΔDθ between the rear wheel angle data DθT(Dθ(1)) of the current routine and the rear wheel angle data DθT(Dθ(2)) of the previous routine, and moves to S550. If the difference ΔDθ is smaller than or equal to the determination value Dθ0 at S550, the CPU 65 moves to S560. At S560, the CPU 65 stops sending the excitation signal S2 to the solenoid 51 thereby maintaining the valve 49 at the disconnection position 49a. The CPU 65 then suspends the current process. In this manner, the correction of the steering wheel angle is inhibited when the rear wheels 31 are actually being moved to an oversteer position, that is, when the turning condition of the vehicle is in the oversteer region Φ and the amount of hydraulic oil supplied to the steering cylinder 24 is small.

If the difference ΔDθ is greater than the determination value Dθ0 at S550, the CPU 65 moves to S510. In this case, a relatively great amount of oil is being supplied to the steering cylinder 24. Therefore, if the turning condition of the vehicle is such that the steering wheel angle correction can move the rear wheels 31 to an oversteer position, the pressure of the supplied oil restricts the movement of the cylinder 24. Therefore, the rear wheels 31 are not moved to an oversteer position. The correction of the steering wheel angle is thus not prohibited.

If the difference ΔC is less than the allowable value ΔC0 at step S510 or if the flags FHD and FCD do not match at step S520, the CPU 65 moves to step S560. At step S560, the CPU 65 stops sending the excitation signal S2 to the solenoid 51 thereby maintaining the valve 49 at the disconnection position 49a. The CPU 65 then suspends the current process. In this manner, the correction of the steering wheel angle is not executed if the angle discrepancy Δθ is within the allowable range. Also, the correction is prohibited if the steering wheel 35 is being rotated in a direction that will not eliminate the angle discrepancy Δθ by the minimum rotation amount.

As described above, the power steering apparatus of Figs. 11 to 13 has the following advantages.

(a) First, vehicle condition values (the vehicle speed V and the wheel angle θT of the rear wheels 31) are detected. The turning condition of the vehicle is judged based on the detected vehicle condition values. If a correction determining device (the microcomputer 62) judges that the turning condition is in the oversteer region Φ, a correction inhibiting device (the microcomputer 62) prohibits the steering control device (the microcomputer 62) from activating the electromagnetic valve 49. Accordingly, the correction of the steering wheel angle is prohibited and the rear wheels 31 are locked with the steering wheel 35.

Therefore, when the steering wheel 35 needs to be locked with the rear wheels 35, the steering wheel angle correction is prohibited. If steering wheel angle correction is judged to affect the stability of the forklift 1, the steering wheel angle is not corrected.

(b) The vehicle condition value is represented by the turning condition of the vehicle, which is determined by the vehicle speed V and the angle $\theta T$ of the rear wheels 31. If the turning condition is in the oversteer region $\Phi$ of the map M2 and the amount of hydraulic oil supplied to the steering cylinder 24 is small, the rear wheels 31 are moved to an oversteer position. In this state, a steering wheel angle correction is inhibited. In other words, if a steering wheel angle correction is judged to move the rear wheels 31 to an oversteer position, the steering wheel angle correction is inhibited.

If the wheel angle $\theta T$ of the rear wheels 31 is small, the steering wheel angle correction is executed even if the vehicle speed V is high. Also, if the vehicle speed V is low, the steering angle correction is executed even if the wheel angle of the rear wheels $\theta T$ is great. Therefore, discrepancies of the steering wheel angle are corrected in a wide range of situations.

The embodiments of Figs. 1-10 and the embodiment of Figs. 11-13 may be modified as follows.

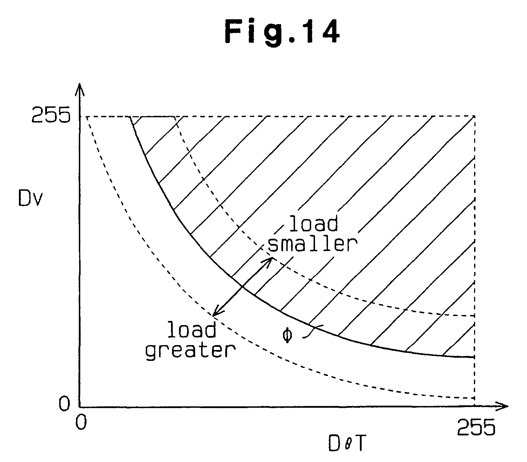

In the embodiment of Figs. 11-13, the oversteer region $\Phi$ may be adjusted based on the load acting on the rear wheels 31 as illustrated by arrows in Fig. 14. The oversteer amount of the rear wheels 31 changes in accordance with the load acting on the rear wheels 31. That is, the load is smaller, the rear wheels 31 are moved to an oversteer position at a higher vehicle speed V and at a greater wheel angle $\theta T$ of the rear wheels 31. Therefore, when the load on the rear wheels 31 is small, the region $\Phi$ is made smaller as shown in Fig. 14. In other words, the margin of the region $\Phi$ is moved to correspond to a higher vehicle speed V and a greater wheel angle $\theta T$ of the rear wheels 31. This enlarges the range of the turning condition within which steering wheel angle correction is executed. Specifically, when the load on the rear wheels 31 is small and the vehicle is traveling at a high speed, the steering wheel angle correction is executed at a greater wheel angle $\theta T$. Likewise, when the load on the rear wheel 31 is small and the wheel angle $\theta T$ is great, steering wheel angle correction is executed at a higher vehicle speed V. Hence, the steering wheel angle discrepancy is corrected in a wider turning condition range. Therefore, the steering wheel angle discrepancy is effectively corrected.

In the embodiment of Figs. 1 to 10, the lateral acceleration Gs is computed based on the vehicle speed V and the wheel angle $\theta T$ of the rear wheels 31. The computed lateral acceleration Gs is compared with the determination value G0 for detecting the turning condition of the vehicle. Instead, a map may be used for judging the turning condition of the vehicle. In this case, the map represents the relationship between the vehicle speed V and the wheel angle $\theta T$ and includes a region in which the lateral acceleration Gs is equal to or greater than the determination value G0.

Steering wheel angle correction may be prohibited based on both the lateral acceleration Gs and the turning condition determined by the vehicle speed V and the wheel angle $\theta T$. This construction corrects the steering wheel angle without disturbing the operator and without moving the rear wheels 31 to an oversteer position.

In the embodiment of Figs. 1-10, the lateral acceleration Gs may be directly detected by an acceleration sensor. In the embodiments of Figs. 1-10 and Figs. 11-13, the steering wheel angle detector (the rotary encoder 37) may be replaced with a digital rotation sensor such as a resolver or a magnetic rotation sensor. Further, the rotary encoder 37 may also be replaced with an analog rotation sensor such as a potentiometer or a differential transformer. The wheel angle sensor 32 may also be replaced with a digital rotation sensor, such as a resolver or a magnetic rotation sensor, or with an analog rotation sensor, such as a potentiometer or a differential transformer

In the embodiments of Figs. 1-10 and 11-13, the steering wheel angle $\theta H$ is obtained as a relative angle from the neutral position of the steering wheel or from a position that apparently matches the neutral position. The value of the angle $\theta H$ is therefore between $-180°$ to $180°$. However, the steering angle $\theta H$ may be obtained as an absolute angle, which represents the amount of rotation of the steering wheel 35 from the neutral position. The hydraulic power steering apparatus of Figs. 1-10 and 11-13 may be embodied in an industrial vehicle having no knob on the steering wheel. The apparatus of Figs. 1-10 and 11-13 may also be embodied in a folklift or other industrial vehicle that does not control tilting of the rear axle 12. The present invention may be applied to other types of industrial vehicles that have hydraulic power steering, such as a shovel loader or a vehicle for high lift work.

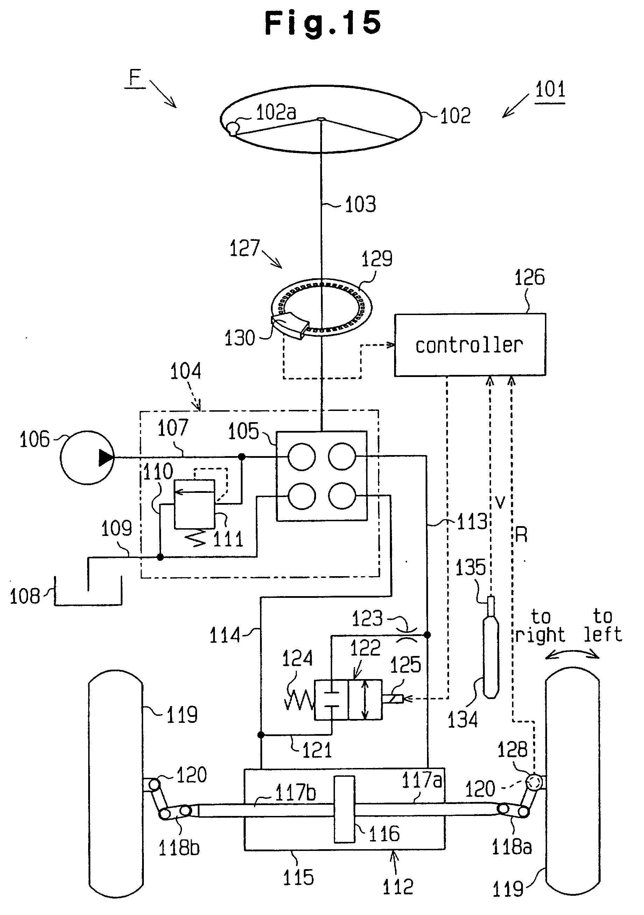

A further embodiment of the present invention will now be described with reference to Figs. 15 to 24.

Fig. 15 schematically shows a power steering apparatus 101 mounted on a forklift F. The forklift F includes a steering wheel 102, which is rotated by an operator. A knob 102a is located on the steering wheel 102 for facilitating one-handed manipulation of the steering wheel 102. The steering wheel 102 is supported on a steering shaft 103. The steering shaft 103 is coupled to a steering unit 104.

The steering unit 104 includes a valve unit 105. The valve unit 105 is connected to a hydraulic pump 106 by a supply passage 107 and to a drain tank 108 by a drain passage 109. The pump 106 supplies hydraulic oil to the valve unit 105 through the supply passage 107. The valve unit 105 drains oil to the drain tank 108 through the drain passage 109. The supply passage 107 is connected to the drain passage 109 by a bypass 110. The bypass 110 includes a relief valve 111. The relief valve 111 maintains the oil pressure in the supply passage 107, or the pressure of oil supplied from the pump 106 to the valve unit 105, at a predetermined level.

The valve unit 105 is directly operated by the steering shaft 103 and supplies hydraulic oil to a steering cylinder 112. The amount of oil supplied from the valve unit 105 to the steering cylinder 112 is proportional to the rotation amount of the steering wheel 102. The valve unit 105 is connected to the steering cylinder 112 by a pair of hydraulic lines 113, 114. When the steering wheel 102 is rotated to the right, the line 113 serves as a supply line for sending hydraulic oil from the pump 106 to the cylinder 112. At this time, the line 114 serves as a return line for returning hydraulic oil to the pump 106. When the steering wheel 102 is rotated to the left, the line 114 serves as a supply line and the line 113 serves as a return line.

The steering cylinder 112 includes a cylindrical housing 115, a piston 116 and a pair of piston rods 117a, 117b. The housing 115 is fixed to the body frame of the forklift F. The piston 116 is reciprocally housed in the housing 115. The piston rods 117a, 117b are secured to the sides of the piston 116 and protrude from the ends of the housing 115. The piston 116 divides the interior of the housing 115 into two chambers. The hydraulic lines 113, 114 are respectively connected to the chambers in the housing 115.

The distal ends of the piston rods 117a, 117b are coupled to vehicle wheels (rear wheels) 119 by link mechanisms 118a, 118b. As the steering cylinder 112 is actuated, the rear wheels 119 are pivoted about kingpins 120.

The hydraulic lines 113, 114 are connected to each other by a bypass line 121. The bypass line 121 includes an electromagnetic control valve 122 and a throttle passage 123. The valve 122 functions as a correction device. The valve 122 returns some hydraulic oil from the valve unit 105 to the drain tank 108 via the bypass line 121 thereby reducing the displacement of the piston 116 in the steering cylinder 112. In other words, the valve 122 races the steering wheel 102. The racing of the steering wheel 102 corrects the position of the steering wheel 102 by allowing the rotation amount of the steering wheel 102 to catch up with the wheel angle of the rear wheels 119.

The control valve 122 is a normally closed two-way switch valve. The control valve 122 is moved between a disconnection position (the state of Fig. 15) and a connection position. At the disconnection position, the control valve 122 closes the bypass line 121. At the connection position, the control valve 122 opens the bypass line 121. The valve 122 includes a solenoid 125 and a spool (not shown). The spool is urged by a spring 124 toward the disconnection position. The valve 122 is moved to the connection position when the solenoid 125 is excited and is moved to the disconnection position when the solenoid 125 is de-excited. The solenoid 125 is electrically connected with a controller 126. The controller 126 sends control signals to the solenoid 125 thereby exciting and de-exciting the solenoid 125. If the control valve 122 is stuck at the connection position due to a malfunction, the throttle passage 123 limits the amount of hydraulic oil flow in the bypass line 121 thereby allowing the rear wheels 119 to be steered by rotation of the steering wheels 102.

The controller 126 is electrically connected to a rotary encoder 127 and to a potentiometer 128. The rotary encoder 127 functions as a steering wheel angle detector and as an rotation direction detector. The potentiometer 128 functions as a wheel angle detector. The encoder 127 includes a disk 129 and a steering wheel angle sensor 130. The disk 129 is fixed to and rotates integrally with the steering shaft 103. Slits 129a and a slit 129b are formed in the disk 129. The sensor 130 includes three pairs of photocouplers for detecting the slits 129a and 129b. The detection signals from the sensor 130 are input to the controller 126.

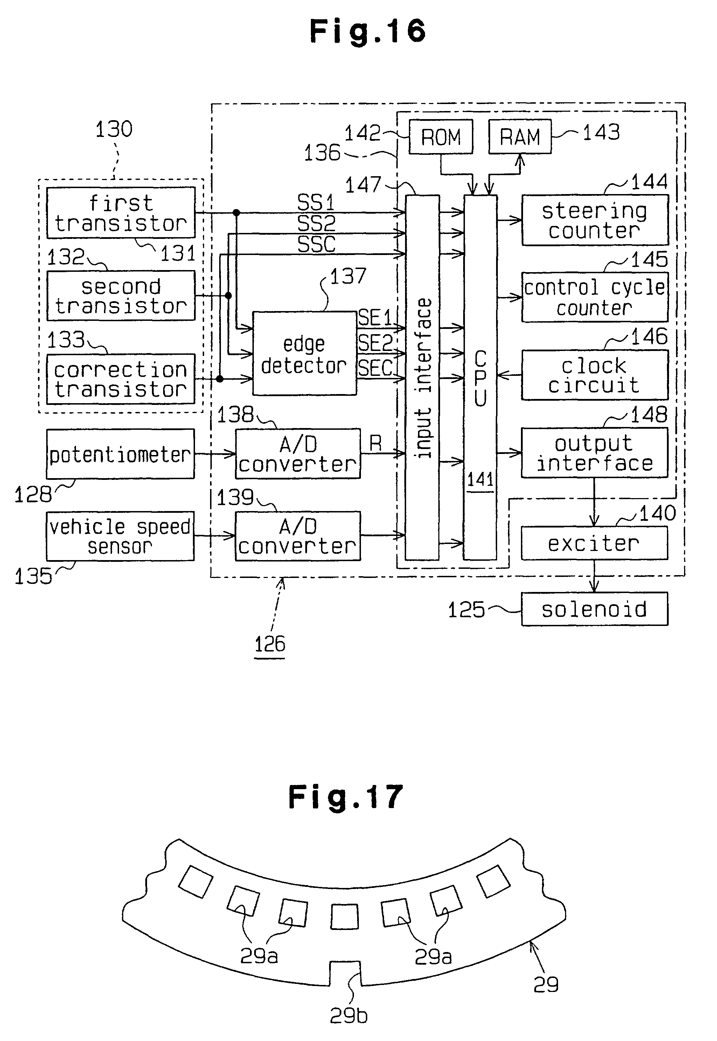

As shown in Figs. 15 and 17, the slits 129a are circumferentially formed in the disk 129 and are equally spaced apart. The number of the slits 129a is forty in this embodiment. The single slit 129b is formed in the periphery of the disk 129 and is located radially outside of the slits 129a. The steering wheel angle sensor 130 includes a first transistor 131, a second transistor 132 and a correction transistor 133 (see Fig. 16). The transistors 131, 132 and 133 are phototransistors and function as photocouplers.

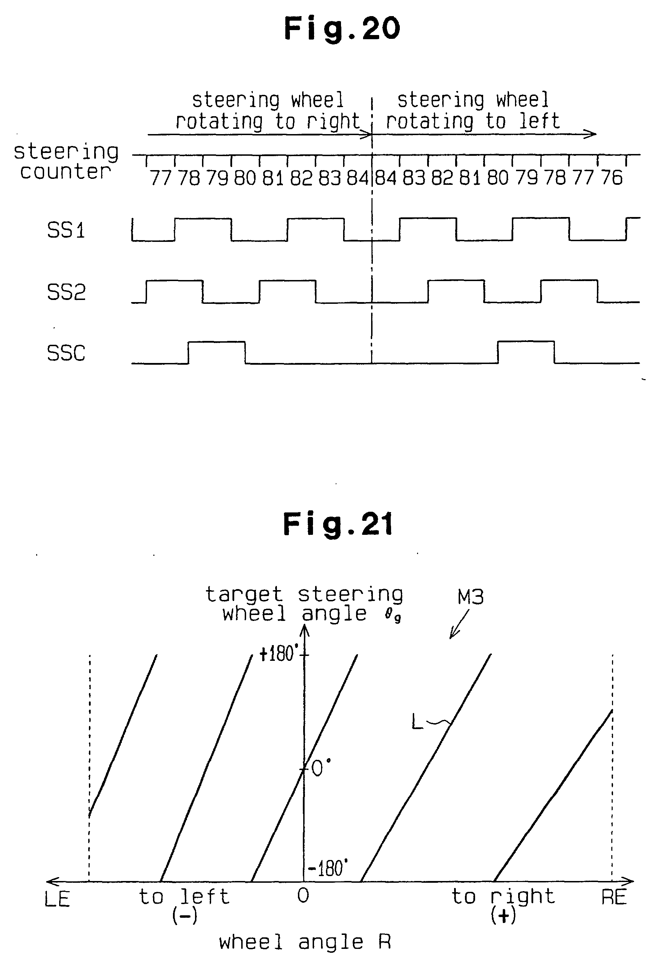

The first and second transistors 131, 132 detect light that passes through the slits 129a. The transistors 131, 132 outputs detection signals SS1 and SS2 (see Fig. 20), respectively. During one turn of the steering wheel 102, each of the signals SS1 and SS2 is turned on and off forty times. The phases of the signals SS1 and SS2 are offset by 90° , or by a quarter cycle. Detecting and counting the edges of the signals SS1 and SS2 allow the rotation angle of the steering wheel 102 (hereinafter referred to as steering wheel angle θ) to be detected with a resolution of one one-hundred-sixtieth of a turn of the steering wheel 102. The steering wheel angle θ is represented as a counter value C by a steering counter 144. The counter value C represents the relative angle of the steering wheel 102.

The correction transistor 133 detects light that passes through the slit 129b and outputs detection signal (digital signal) SSC (see Fig. 20). The signal SSC is turned on when the steering wheel 102 is at the neutral position. The signal SSC is used for correcting the counter value C in the steering counter 144.

The potentiometer 128 is located on the kingpin 120 that supports the right rear wheel 119. The potentiometer 128 detects rotation amount of the kingpin 120 and sends a wheel angle signal R to the controller 126. The signal R represents the wheel angle of the rear wheels 119 with respect to their straight ahead position.

The forklift F has front drive wheels. Force is transmitted to the drive wheels by a front differential ring gear 134. The ring gear 134 is provided with a vehicle speed sensor 135. The sensor 135 sends a vehicle speed signal v to the controller 126. The signal v represents the speed of the forklift F.

As illustrated in Fig. 16, the controller 126 includes a microcomputer 136, an edge detector 137, analog-to-digital converters 138, 139 and an exciter 140. The microcomputer 136 includes a central processing unit (CPU) 141, a read only memory (ROM), a random access memory (RAM) 143, the steering counter 144, a control cycle counter 145, a clock circuit 146, an input interface 147 and an output interface 148. The potentiometer 128 is connected to the analog-to-digital converter 138. The vehicle speed sensor 135 is connected to the analog-to-digital converter 139.

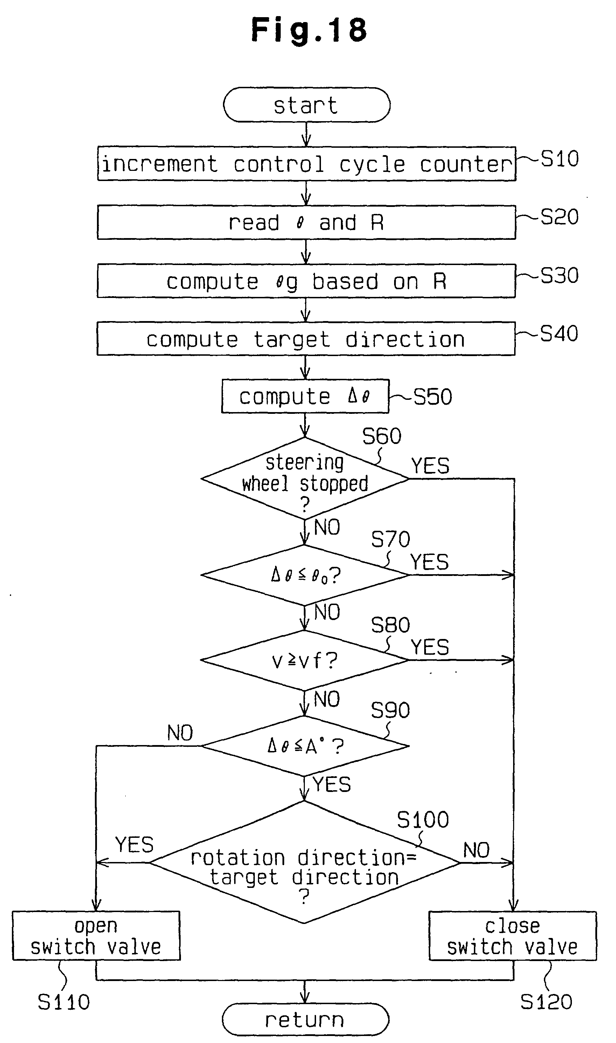

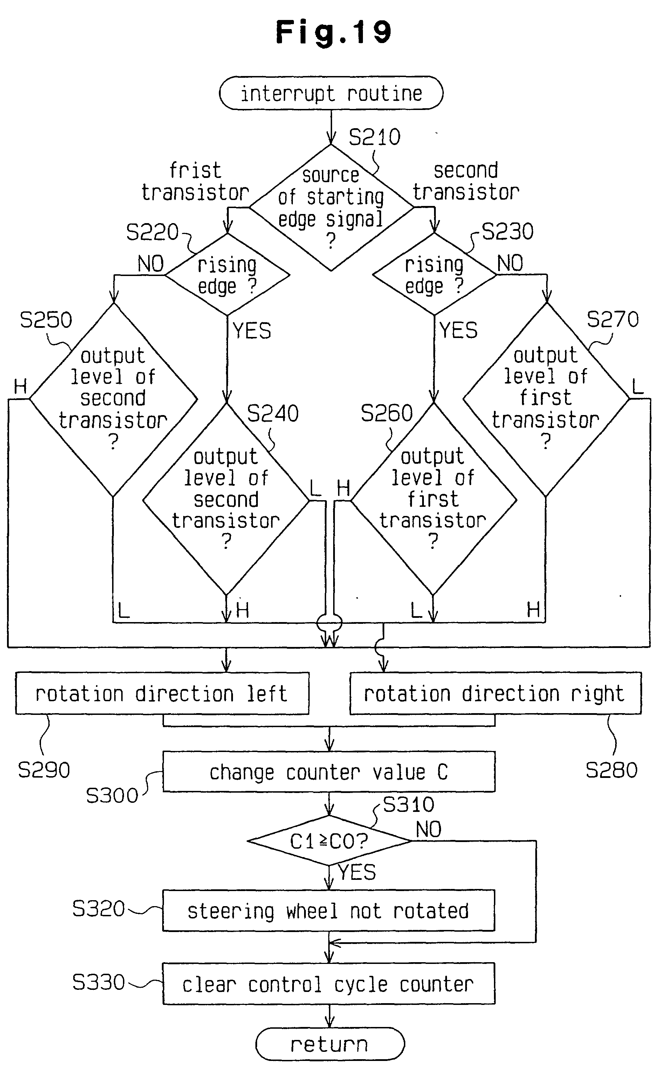

The CPU 141 executes various computations based on programs stored in the ROM 142 and stores the results of the computations in the RAM 143. The ROM 142 stores a knob position correction program shown in the flowcharts of Figs. 18 and 19. In these flowcharts, step S30 corresponds to a computation of a target position of the steering wheel 102, step S40 corresponds to detection of target rotation direction of the steering wheel 102, S80 corresponds to judgment of the vehicle speed, step S120 corresponds to the inhibition of knob position correction and steps S210 to S290 correspond to detection of the rotation direction of the steering wheel 102

The first transistor 131, the second transistor 132 and a correction transistor 133 send detection signals SS1, SS2, SSC to the CPU 141 and the edge detector 137. The edge detector 137 detects rising edges and falling edges of the signals SS1, SS2 and SSC. Upon detection of the edges, the edge detector 137 outputs edges signals SE1, SE2, SEC.

The steering counter 144 detects the angle θ of the steering wheel 102. Every time the CPU 141 receives either one of the edge signals SE1, SE2, that is, every time the steering wheel 102 is rotated one one-hundred-sixtieth of a turn (2.25° ), the CPU 141 increments or decrements the counter value C of the steering counter 144 by one. The position of the knob 102a (steering wheel angle θ) is represented by a relative angle of the steering wheel 102. In the counter 144, the steering wheel angle θ is expressed by the value of the counter value C, which is a number between zero and one hundred fifty nine. The counter 144 sets the counter value C to eighty when the knob 102a is at the neutral position. When the knob 102a passes by the neutral position, the edge detector 137 receives the edge signal SEC. At this time, the CPU 141 executes an interrupt for setting the counter value 102a to eighty. Accordingly, the counter value C is always eighty when the knob 102a is at the neutral position.

The control cycle counter 145 counts the number of executions of the knob position correction. Every time the counter value C in the steering counter 144 is changed, that is, every time the steering wheel 102 is rotated one one-hundred-sixtieth of a turn, the control cycle counter 145 is cleared. Therefore, when the counter value C is changed, counter value C1 of the counter 145 indirectly indicates how much time has been required for the steering wheel 102 to rotate one one-hundred-sixtieth of a turn. The counter value C1 of the control cycle counter 145 is used for judging whether the steering wheel 102 is being rotated or not.

The CPU 141 executes the knob position correction shown in Fig. 18 at predetermined time intervals t0 (for example, 10 milliseconds) based on clock signals from the clock circuit 146. However, when receiving either one of the edge signals SE1 and SE2, the CPU 141 assigns priority to the interrupt routine shown in Fig. 19 and executes the routine of Fig. 19. Similarly, when receiving the edge signal SEC, the CPU 141 executes the correction of the counter value C of the steering counter 144.

The interrupt routine of Fig. 19 is executed by the CPU 141 every time the CPU 141 receives either one of the edge signals SE1 and SE2. This routine contains the detection of the rotation direction of the steering wheel 102 (hereinafter referred to as rotation direction), the counting of the steering counter 144, the clearing of the control cycle counter 145 and the detection of stopping of the steering wheel rotation.

The CPU 141 judges the rotation direction of the steering wheel 102 when receiving an edge signal (SE1 or SE2). That is, the CPU 141 sees the type of the edge (rising edge or falling edge) of the received edge signal (SE1 or SE2) and the level of a detection signal (SS1 or SS2) that is not the source of the received edge signal (SE1 or SE2). As shown in Fig. 20, for example, when the signal SS1 is a "rising edge" and the signal SS2 is H level, the CPU 141 judges that the steering wheel 102 is being rotated to the right. When the signal SS1 is a "rising edge" and the signal SS2 is L level, the CPU 141 judges that the steering wheel 102 is being rotated to the left. If the signal SS1 is a "falling edge", the relationship between the output level of the signal SS2 and the rotation direction is inverted. When the signal SS2 is a "rising edge" and the signal SS1 is L level, the CPU 141 judges that the steering wheel 102 is being rotated to the right. When the signal SS2 is a "rising edge" and the signal SS1 is H level, the CPU 141 judges that the steering wheel 102 is being rotated to the left. If the signal SS2 is a "falling edge", the relationship between the output level of the signal SS1 and the rotation direction is inverted.

The wheel angle signal R from the potentiometer 128 is converted into an 8-bit AD value (0-255) by the converter 138 and is then input to the CPU 141. The CPU 141 stores this AD value as the wheel angle R. An AD value of one hundred twenty eight corresponds to the 0° position of the rear wheels 119. When the AD value is less than one hundred twenty eight (AD value < 128), that is, when the angle R is negative, the rear wheels 119 are steered such that the forklift F turns to the left. When the AD value is greater than one hundred twenty eight (AD value > 128), that is, when the angle R is positive, the rear wheels 119 are steered to turn the forklift F to the right.

The vehicle speed signal v from the vehicle speed sensor 135 is converted into an 8-bit AD value (0-255) by the converter 139 and is then input to the CPU 141. The CPU 141 commands the exciter 140, which is connected to the output interface 148, to output a control signal to the solenoid 125 for exciting or de-exciting the solenoid 125.

The ROM 142 stores a map M3 of Fig. 21. The map M3 shows target steering wheel angle θg in relation to the wheel angle R of the rear wheels 119. The target angle θg is used when correcting the position of the knob 102a. The map M3 includes control target lines L, which represents the relationship between the wheel angle R and the target angle θg, between the rightmost position of the steering wheels 119 and the leftmost position of the steering wheels 119. The map M3 allows the target angle θg to be determined as a relative angle of the steering wheel 102 that corresponds to the wheel angle of the rear wheels 102. The locations of the lines L are determined on the assumption that the efficiency of the steering unit 104 (the actual oil displacement amount divided by the theoretical oil displacement amount) is 100%. In this embodiment, the steering wheel angle θ is set to 0° (the counter value C = 80) when the knob 102a is at the neutral position. The target angle θg (-180° to 180°) corresponds to value from zero to one hundred fifty nine of the target steering counter value Cg.

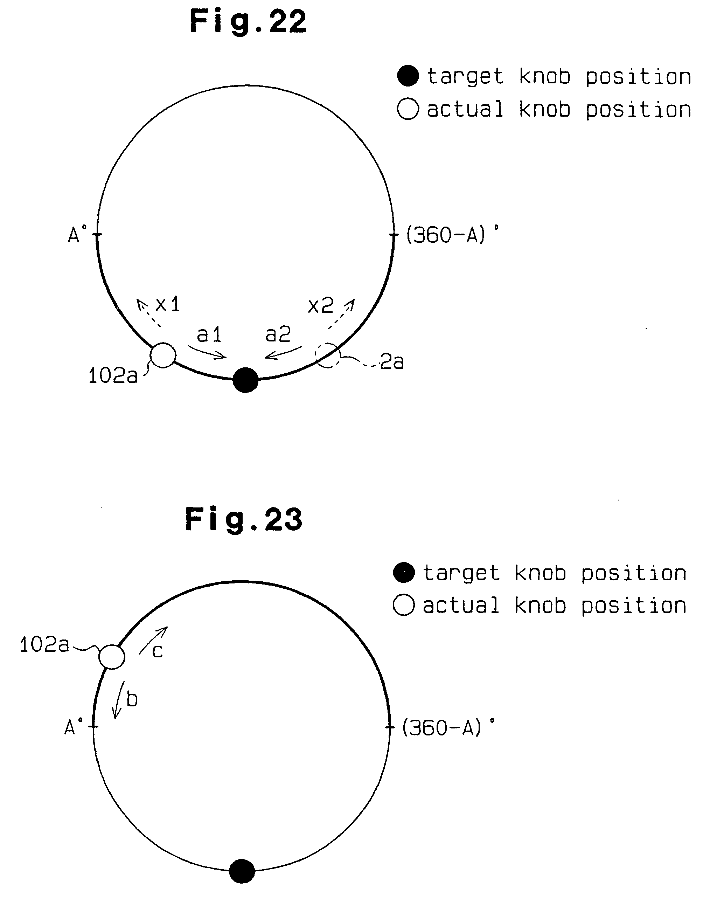

In the knob position correction, the CPU 141 computes the angle discrepancy Δθ between the angle θ of the steering wheel 102 and the target angle θg, which is obtained based on the wheel angle R of the rear wheels 119. The CPU 141 executes the knob position correction to decrease the angle discrepancy Δθ below an allowable value θ0 (for example, about 5°). The angle discrepancy Δθ refers to the shortest angular distance between the actual knob position and the target knob position as illustrated in Figs. 22 and 23. If the actual angle discrepancy Δθs exceeds 180°, the angle discrepancy Δθ is obtained by subtracting Δθs from 360° (Δθ=360° -Δθs).

The conditions on which the knob position correction is executed changes according to whether the angle discrepancy Δθ is greater than a predetermined angle A°. When the angle discrepancy Δθ is smaller than A° (Δθs≦A° or Δθs≧ (360 - A)°), the knob position is corrected only when the rotation direction of the steering wheel 102 matches a direction (target direction) in which the actual knob position approaches the target knob position by the shortest distance. When the angle discrepancy Δθ exceeds the angle A° (A° <Δθs < (360- A)°), the knob position is corrected regardless of the rotation direction of the steering wheel 102.

The predetermined angle A° is between 80° to 120°. Racing the steering wheel 102 by a great amount during a knob position correction raises a possibility that the angle discrepancy will become greater after the correction. The use of the predetermined angle A° lowers this possibility. That is, when the angle discrepancy is greater than the angle A° and the steering wheel 102 is rotated in a direction opposite to the target direction, the correction is more likely to reduce the angle discrepancy than to increase the discrepancy.

The CPU 141 inhibits the knob position correction when the forklift F is moving at a speed equal to or greater than a predetermined speed vf. Specifically, the CPU 141 judges whether the vehicle speed v is greater than the predetermine speed vf based on a detection signal from the vehicle speed sensor 135. If the vehicle speed v is greater than or equal to the predetermined speed vf, the CPU 141 stops actuating the electromagnetic valve 122. The value of the speed vf is set approximately at 70 to 80 percent of the maximum speed. The maximum speed of the forklift F is 20km/h. Therefore, the predetermined speed vf is about 15km/h. As a rule, the correction of the steering wheel position is stopped when the vehicle speed v exceeds the speed vf.

The operation of the power steering apparatus 101 will now be described.

While operating the forklift F, an operator holds the knob 102a for manipulating the steering wheel 102. When the steering wheel 102 is rotated, the steering shaft 103 is integrally rotated with the steering wheel 102. This causes the valve unit 105 to supply hydraulic oil to the steering cylinder 112. The amount of the supplied oil corresponds to the rotation amount of the steering wheel 102. As a result, the rear wheels 119 are steered by the amount corresponding to the rotation amount of the steering wheel 102. Oil leakage in the hydraulic system, which includes the steering cylinder 112, lowers the efficiency of the steering unit 104. The lowered efficiency of the steering unit 104 or a slow rotation speed of the steering wheel 102 may displace the position of the knob 102a from the normal position, which is associated with the wheel angle of the rear wheels 119. The knob position correction process is executed for putting the actual knob position back to the normal position.

The knob position correction executed by the CPU 141 will now be described with reference to the flowcharts of Figs. 18 and 19. The electromagnetic switch valve 122 is initially at the disconnection position.

When the engine of the forklift F is running, the CPU 141 inputs detection signals SS1, SS2, SSC from the transistors 131, 132, 133, the edge signals SE1, SE2, SEC from the edge detector 137, the wheel angle signal R from the potentiometer 128 and the vehicle speed signal v from the vehicle speed sensor 135.

The CPU 141 executes the knob position correction shown in Fig. 18 at predetermined time intervals t0 (for example, 10 milliseconds). When receiving the edge signals SE1, SE2, the CPU 141 stops the current routine and starts the interrupt routine shown in Fig. 19. In this routine, the CPU 141 executes several processes for obtaining necessary data for the knob position correction. Specifically, the CPU 141 executes the counting process of the steering counter 144, the computation for detecting the rotation direction of the steering wheel 102. The CPU 141 also judges whether the steering wheel is stopped and clears the control cycle counter 145. In the first step S10, the counter value C1 of the control counter 145 is incremented. In other words, the counter value C1 is incremented by one at every predetermined time interval t0.

First, the interrupt routine of Fig. 19 will be described. When receiving either one of the edge signals SE1 and SE2 (a starting edge signal), the CPU 141 stops an ongoing process and starts the interrupt routine of Fig 19. The CPU 141 judges the rotation direction of the steering wheel 102 in steps S210 to S290 by referring to the signals SS1, SS2, SE1, SE2. Specifically, the CPU 141 judges whether the edge of the detection signal (SS1 or SS2) that produced the starting edge signal (SE1 or SE2) was rising or falling. The CPU 141 also judges the level of the other detection signal (SS2 or SS1). The rotation direction of the steering wheel 102 is judged based on these data.

At S210, the CPU 141 judges which detection signal (SS1 or SS2) is the source of the starting edge signal the starting edge signal (SE1 or SE2). In other words the CPU 141 judges which of the transistors 31, 32 is the source of the starting edge signal.

If the first transistor 31 is the source of the starting edge signal, that is, if the current routine was started by the edge signal SE1, the CPU 141 judges whether the signal SE1 represents a rising edge or a falling edge by referring to an edge flag stored in the first transistor 31.

The edge flag of the first transistor 31 previously stores the level of the detection signal SS1 in the current routine based on the level of the detection signal SS1 in the previous interrupt routine. For example, if the output level of the first transistor 31 in the previous routine was H, the edge flag stores a value zero, which corresponds to the level "L" in the current routine. In this case, the edge signal SE1 in the current routine is a falling edge, and the determination of S220 is NO.

**[0156]** If the second transistor 32 is the source of the starting edge signal, that is, if the current routine was started by the edge signal SE2, the CPU 141 judges whether the signal SE2 represents a rising edge or a falling edge by referring to an edge flag stored in the second transistor 31.

The edge flag of the second transistor 32 previously stores the level of the detection signal SS2 in the current routine based on the level of the detection signal SS2 in the previous interrupt routine. For example, if the output level of the first transistor 32 in the previous routine was L, the edge flag stores a value one, which corresponds to the level "H" in the current routine. In this case, the edge signal SE2 in the current routine is a rising edge, and the determination of S230 is YES.

At steps S240-S270, the CPU 141 judges the output level of a transistor that is not the source of the starting edge signal (SE1 or SE2). The phase difference of the signals SS1 and SS2 changes depending on the rotation direction of the steering wheel 102. The CPU 141 judges the rotation direction of the steering wheel 102 based on the type of the edge of the detection signal (SS1 or SS2) that is the source of the starting edges signal and the level of the other detection signal. The CPU 141 sets the rotation direction flag to zero when the steering wheel 102 is being rotated to the left and sets the flag to one when the steering wheel 102 is being rotated to the right.

At S300, the CPU 141 changes the counter value C in the steering counter 44 in accordance with the detected direction of the steering wheel rotation. Specifically, the CPU 141 increments the value C when the steering wheel 102 is being rotated to the right and decrements the value C when the steering wheel 102 is being rotated to the left. When incrementing, if the value C is one hundred fifty nine (159), the CPU 141 changes the value C to zero. When decrementing, if the value C is zero, the CPU 141 changes the value C to one hundred fifty nine (159). In this manner, the counter value C in the steering counter 144 is changed to correspond to the steering wheel angle θ, which is represented by the relative angle of the steering wheel 102.

At S310, the CPU 141 judges whether or not the counter value C1 of the control cycle counter 145 is equal to or greater than the value C0. The counter value C1 is cleared every time the interrupt routine of Fig. 19 is executed, that is, every time the steering wheel 102 is rotated one one-hundred-sixtieth of a turn (2. 25 degrees). Also, the counter value C1 is incremented at every cycle t0 (for example, 10 milliseconds). Therefore, the counter value C1 indicates the time period during which the steering wheel 102 is rotated one one-hundred-sixtieth of a turn. If the counter value C1 is greater than the value C0, the CPU 141 judges that the steering wheel 102 is not rotating.

If the counter value C1 is equal to or greater than the value C0, the CPU 141 determines that the steering wheel 102 is not being rotated and sets a flag for indicating that the wheel 102 is not rotating to one (S320). Thereafter, the CPU 141 clears the control cycle counter 45 (S330). If the counter value C1 is less than the value C0, the CPU 141 does not change the value of the rotation stop flag, which is zero, and clears the counter 45 (S330).

As described above, during the knob position correction, the actual angle θ of the steering wheel 102 is detected based on the counter value C of the steering counter 44. The rotation direction of the steering wheel 102 is detected based on the rotation direction flag. Further, whether the steering wheel is rotating is detected by referring to rotation stop flag.

The knob position correction will now be described with reference to Fig. 18. At S10, the CPU 141 increments the control cycle counter 145. At S20, the CPU 141 reads the angle θ of the steering wheel 102 and the wheel angle R of the rear wheels 119. The steering wheel angle θ is judged from counter value C stored in the steering counter 144.

At S30, the CPU 141 computes the target angle θg of the steering wheel 102 using the map M3 of Fig. 21 based on the wheel angle R of the rear wheel 119. The target angle θg is expressed by the target steering counter value Cg.

At S40, the CPU 141 computes the target direction of the knob position correction. That is, the CPU 141 judges which one of the leftward rotation and the rightward rotation of the steering wheel 102 will be shorter for moving the actual knob position to the target knob position. The CPU 141 computes the difference $\Delta C$ between the current counter value C of the steering counter 144 and the target steering counter value Cg ($\Delta C = |C\text{-}Cg|$). When the difference $\Delta C$ is equal to or less than "80" ( $|\theta\text{-}\theta g| \leqq 180°$ ), the CPU 141 sets the target direction to the right if C is smaller than Cg (C < Cg), and sets the target direction to the left if the C is greater than Cg (C > Cg). When the difference $\Delta C$ is greater than 80 ($|\theta\text{-}\theta g| > 180°$ ), the CPU 141 sets the target direction to the left if C is smaller than Cg (C < Cg), and sets the target direction to the right if the C is greater than Cg (C > Cg). The computed target direction is stored as the value of the target direction flag. That is, the flag is set to zero when the target direction is left and is set to one when the target direction is right.

At S50, the CPU 141 computes the angle discrepancy $\Delta\theta$ between the actual position of the knob 102a and the target position of the knob 102a. If the difference between θ and θg is equal to or less than 180° , $\Delta\theta$ is set as the difference between θ and θg ($\Delta\theta=|\theta\text{-}\theta g|$). If the difference between θ and θg is greater than 180° , $\Delta\theta$ is computed by an equation ($\Delta\theta=360° - |\theta\text{-}\theta g|$). Accordingly, the shortest angle discrepancy $\Delta\theta$ between the current knob position and the target knob position is obtained. The computed angle discrepancy $\Delta\theta$ is represented as a counter value, which computed by the counter values C and Cg.

At S60, the CPU 141 sees the value of the rotation stop flag for judging whether the steering wheel 102 is stopped. If the flag is set to one, the CPU 141 judges that the steering wheel 102 is not rotating and moves to S120. At S120, the CPU 141 closes the switch valve 122. Therefore, when the steering wheel 102 is not rotating, the knob position correction is not executed. If the steering wheel 102 is being rotated, the CPU 141 moves to S70.

At S70, the CPU 141 judges whether the angle discrepancy $\Delta\theta$ is equal to or less than the allowable

value θ0. If $\Delta\theta$ is equal to or less than the allowable value θ0, the CPU 141 moves to S120 and closes the switch valve 122. Therefore, when the angle discrepancy $\Delta\theta$ is equal to or less than θ0, the knob position correction is not executed. On the other hand, if the angle discrepancy $\Delta\theta$ is greater than the allowable value θ0, the CPU 141 moves to S80.

At S80, the CPU 141 judges whether the vehicle speed v is equal to or greater than the reference speed vf. That is, the CPU 141 computes the vehicle speed v based on an AD value from the vehicle speed sensor 35 and compares the vehicle speed v with the reference speed vf. If the vehicle speed v is equal to or greater than the reference speed vf, the CPU 141 moves to S120 and closes the switch valve 122. If the vehicle speed v is less than the reference speed vf, the CPU 141 moves to S90.

At S90, the CPU 141 judges the angle discrepancy $\Delta\theta$ is equal to smaller than the reference angle A° . If the angle discrepancy $\Delta\theta$ is greater than the angle A° , the CPU 141 moves to S110 and excites the solenoid 125 to open the switch valve 122. Thus, if the angle discrepancy $\Delta\theta$ is greater than the angle A° , as illustrated in Fig. 23, the knob position correction is executed if the steering wheel 102 is rotated to the left (in a direction "b") or to the right (in a direction "c"). The knob 102a therefore approaches the target position from the current position. If the steering wheel 102 is rotated in the direction "c", the angle discrepancy $\Delta\theta$ is corrected by the longer amount of rotation. However, the angle discrepancy $\Delta\theta$ is greater than the angle A° , and is relatively large. Therefore, in many cases, the knob position correction will decrease the angle discrepancy $\Delta\theta$, rather than increase it. As a result, the knob position correction is executed more frequently and an angle discrepancy greater than the angle A° is not left uncorrected.

On the other hand, when the angle discrepancy $\Delta\theta$ is equal to or smaller than the angle A° ($\Delta\theta \leqq A°$ ), the CPU 141 moves to S100 and judges whether the actual rotating direction of the steering wheel 102 matches the target direction. Specifically, the CPU 141 judges whether the value of the rotation direction flag matches the value of the target direction flag. If the rotation direction matches the target direction, the CPU 141 moves to S110 and opens the valve 122. If the rotating direction is different from the target direction, the CPU 141 moves to S120 and closes the valve 122. If the knob 102a is located at a position shown by a solid line in Fig. 22 and is being moved in a direction "a1" (to the left), the knob 102a is approaching the target position by the shortest rotation amount. In this case, the knob position correction is executed. On the other hand, when the knob 102a is being moved in a direction "x1" (to the right), that is, when the knob 102a is approaching the target position by the longest rotation amount, the knob position correction is not executed.

Also, when the knob 102a is located at a position illustrated by the broken line in Fig. 22, the position of the knob 102a is displaced from the target position by the amount greater than $(360-A)°$. In this case, the knob position correction is executed if the steering wheel 102 is being rotated in a direction "a2" (to the right), that is, if the knob 102a is approaching the target position by the shortest rotation amount. If the steering wheel 102 is rotated in a direction "x2" (to the left), that is, if the knob 102a is moving away from the target position, the knob position correction is not executed. If the actual discrepancy is greater than 360°, the relative angle of the steering wheel 102 is used in the knob position correction. In other words, the apparent discrepancy between the actual position of the knob 102a and the target position is used in the correction. Thus, the correction amount is always less than 360°. For example, when the position of the knob 102a is displaced from the target position by one or two turns of the steering wheel 102, if the apparent position of the knob 102a matches the target position, the knob correction is not executed.

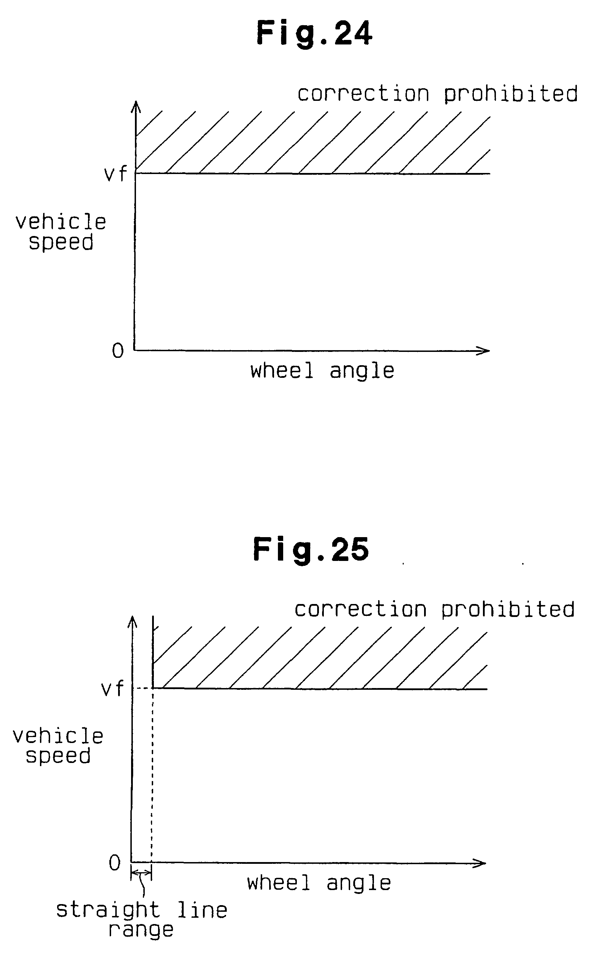

Fig. 24 is a graph showing the relationship between the wheel angle of the rear wheels 119 and a vehicle speed. The graph also shows a region at which the knob position correction is inhibited. In this graph, the rear wheel angle is represented by absolute values. A diagonally shaded area is the inhibition region in which the knob correction is inhibited. As shown in Fig.' 24, if the vehicle speed is in the high speed region, that is, if the speed is equal to or greater than the reference speed vf, the knob position correction is inhibited regardless of the wheel angle of the rear wheels 119. Therefore, the knob correction is not executed while the forklift F is moving at a high speed, which is equal to or greater than the limit speed vf even if the angle discrepancy $\Delta\theta$ is greater than the allowable value θ0 and the other conditions for executing the correction are satisfied. Thus, if the operator manipulates the steering wheel 102 for changing the course of the forklift F when the forklift F is moving fast, the wheel angle of the rear wheels 119 does not become smaller than the amount the operator intended. Therefore, the operator does not feel disturbed.

The embodiment of Figs. 18-24 has the following advantages.

The knob position correction is not executed when the vehicle speed is equal to or greater than the predetermined speed vf. Therefore, the device of Figs. 18-24 improves the responsiveness of steering operation when the operator attempts to turn the vehicle at high speed. This prevents the operator from feeling disturbed.

The target angle θg of the steering wheel 102 is computed based on the wheel angle of the rear wheels 119. This enables the angle θg to be represented by a relative angle of the steering wheel 102. Accordingly, the position of the knob 102a is corrected by adjusting the relative angle of the steering wheel 102. Therefore, even if the actual angle discrepancy between the actual knob position and the target knob position is greater than 360°, the discrepancy is corrected by the amount of racing of the steering wheel 102 that is one or two turns less than the actual discrepancy. In other words, unnecessary racing of the steering wheel 102 is avoided.

When the angle discrepancy $\Delta\theta$ is smaller than the angle A°, the knob position correction is executed only if the steering wheel 102 is being rotated in a direction to approach the target position by the shortest rotation amount. Therefore, although an angle discrepancy is corrected using the relative angle of the steering wheel 102, the angle discrepancy is positively reduced. For example, even if the actual discrepancy is 280°, the correction amount is 75° if the allowable value θ0 is 5°). In this manner, when the actual discrepancy is less than 360°, the racing amount of the steering wheel 102 for correcting the position of the knob 102a is smaller than the actual discrepancy. As a result, unnecessary racing of the steering wheel 102 is further reduced.

The angle θ of the steering wheel 102 is detected by the rotary encoder 27. Therefore, the counter value C, which corresponds to the position of the knob 102a, is detected along the entire turn (360°) of the steering wheel 102. Unlike a rotational potentiometer is used, the rotary encoder 27 allows the position of the knob 102a to be corrected regardless of the rotation position of the steering wheel 102. This results in a shorter racing amount of the steering wheel 102 during the correction thereby reducing the time required for the correction. When the rear wheels 119 are put back to the straight line position, the knob 102a is securely returned to the neutral position.

Another embodiment of the present invention will now be described with reference to Figs. 25-27. Unlike the embodiment of Figs. 15-24, this embodiment corrects the position of the steering wheel when the vehicle is moving at a high speed if certain conditions are satisfied. Specifically, the angle discrepancy is corrected when the vehicle is traveling in a straight line. In this state, a little unresponsiveness of the rear wheels to rotation of the steering wheel causes little problem. The hardware of this embodiment is the same as those of the embodiment of Figs. 15-24. Part of the knob position correction and a map for computing the target steering wheel angle θg are different from those in the embodiment of Figs. 15-24. Like or the same reference numerals are given to those components that are like or the same as the corresponding components of the third embodiment.

In this embodiment, the CPU 141 functions as a wheel angle sensor that detects whether the rear wheels 119 are in a straight line range. When the vehicle speed v is equal to or greater than the predetermined speed vf, the CPU 141 prohibits the correction. However, if the wheel angle of the rear wheels 119 is within the straight line range, the CPU 141 allows the correction. In other words, the position of the knob 102a is corrected when the vehicle is moving at a high speed if the wheel angle R of the rear wheels 119 is within the straight line range. In this embodiment, the straight line range is defined as a range of the wheel angle R corresponding to ± 20° of the steering wheel 102.

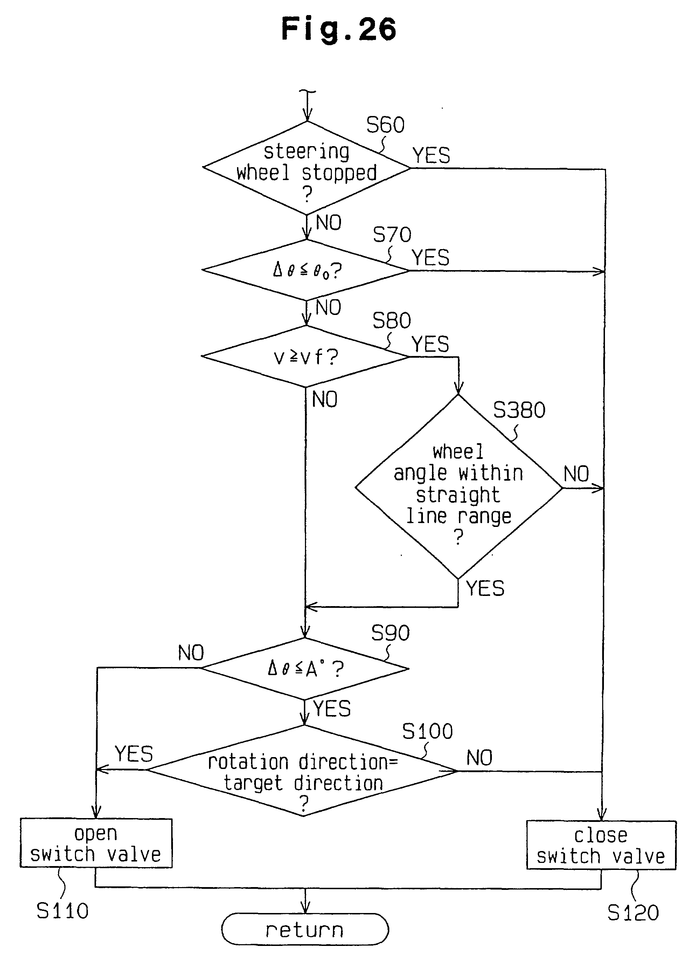

Fig. 26 shows part of the flowchart of the knob position correction according to this embodiment. Since this routine has the same steps (S10-S70) as the routine in Fig. 18, the steps S10-S50 are omitted. The process after S80, at which whether the vehicle speed v is equal to or greater than the predetermined speed vf is judged, is different from that of the flowchart of Fig. 18.

From S10 to S80, the CPU 141 executes the same process as the embodiment of Figs. 15-24. As shown in Fig. 26, the CPU 141 moves to S380 if the vehicle speed v is equal to or greater than the predetermined speed vf. At S380, the CPU 141 judges whether the wheel angle R of the rear wheel 19 is within the straight line range. That is, the CPU 141 judges if the wheel angle R is within a range that corresponds to a range of the angle of the steering wheel 102 from -20° to +20° (-20° ≦R≦20° ). If the condition is not satisfied at S380, the CPU 141 moves to S120 and closes the switch valve 122. If the condition is satisfied, the CPU 141 moves to step 90 and executes the same process from S90 as the embodiment of Figs. 15-24. In other words, if the conditions for correcting the knob position are satisfied in S90 and S100, the CPU 141 corrects the knob position.

Fig. 25 is a graph showing the relationship between the wheel angle of the rear wheel 119 and a vehicle speed. The graph also shows a region at which the knob position correction is prohibited. In this graph, the rear wheel angle is represented by absolute values. A diagonally shaded area is the prohibition region in which the knob correction is prohibited. When the vehicle speed is in the high speed range, the knob position correction is not inhibited if the wheel angle of the rear wheels 119 is in the straight line range. That is, if the operator is manipulating the steering wheel 102 for fine adjusting the wheel angle of the rear wheels 119 while the vehicle is traveling in a straight line at a high speed, steering wheel angle correction is executed.

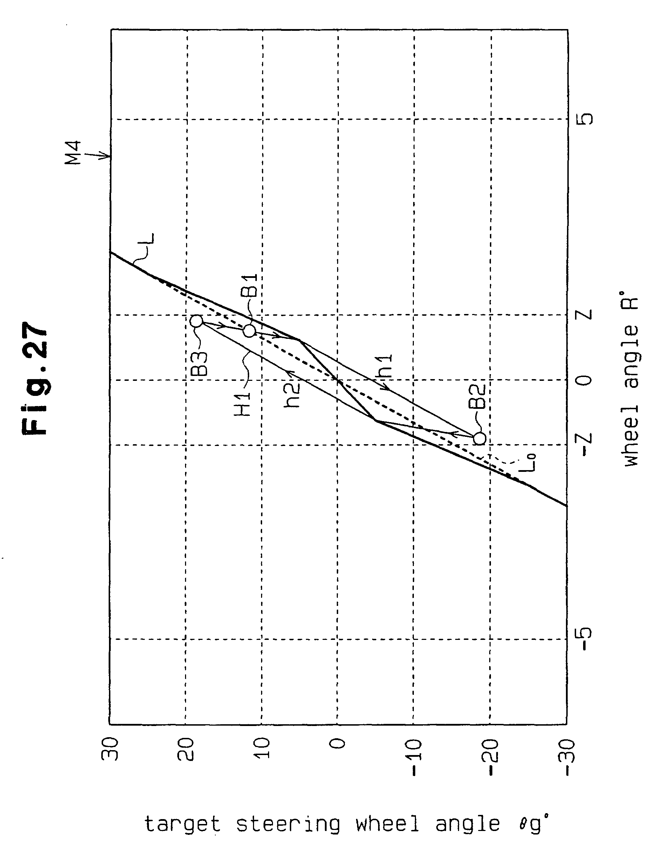

In this embodiment, a map M4 of Fig. 27 is used for computing the target angle θg of the steering wheel 101. When the vehicle is traveling in straight line, the wheel angle R of the rear wheel 119 is within a range between -Z to Z (-Z≦R≦Z, in which Z is, for example, 1° ). In this straight line range, the target control line L is shifted from the ideal control line L0. That is, the line L is shifted downward in the region of positive values of wheel angles R and is shifted upward in the region of negative wheel angles R. The steering wheel 102 is raced by a predetermined amount when the rotation direction of the steering wheel 102 is switched within the straight line range. Repetitive switching of the rotation direction within the straight line range causes the position of the knob 102a (small circles in the map M4) to draw a hysterisis loop H1 in relation to the wheel angle R of the rear wheel 119.

In this embodiment, the target control line L is displaced from the ideal control line L0 by such an amount that racing amount of the steering wheel 102 when the rotation direction is switched is substantially equal to the play in a typical mechanical steering apparatus.

When the operator is fine adjusting the steering wheel 102 during a straight line movement of the vehicle, the steering wheel 102 repeatedly passes by the neutral position. Suppose that the actual position of the knob 102a is moved to a point B1 in the map M4 by a knob position correction and thereafter the vehicle starts traveling in a straight line. If the steering wheel 102 is rotated to the left, the position of the knob 102a moves along a path h1 in the hysterisis loop H1. At this time, the steering wheel 102 is raced by a small amount. The amount of the race represents the play of the steering wheel 102. If the steering wheel 102 is rotated to the left to a position corresponding to -Z° of the wheel angle R of the rear wheels 119, the knob 102a is moved to a point B2 while keeping the play. Then, if the steering wheel 102 is rotated to the right from the position B2, the actual position of the knob 102 is moved along a path h2 in the loop H1 and the steering wheel 102 is raced by a small amount of the play. Then, the knob position is moved, for example, to a point B3 along the path h2 while maintaining the play. If the rotation of the steering wheel 102 is switched at the point B3, the knob position is moved again along the path h1. This produces the play of the steering wheel 102. In this manner, when the vehicle is traveling in a straight line and the operator keeps fine adjusting the steering wheel 102, switching the rotation direction of the steering wheel 102 races the steering wheel 102 and produces the play of the steering wheel 102.

In addition to the advantages of the embodiment of Figs. 15-24, this embodiment has the following advantages.

When the wheel angle R of the rear wheels 119 is within the straight line range, the knob position correction is not prohibited by a vehicle speed v that is greater than the predetermined speed vf. Therefore, if the operator manipulates the steering wheel 102 for fine adjusting the wheel angle of the rear wheels 119, the racing of the steering wheel 102 is used as the play. Thus, the straight line stability of the vehicle is improved.

When the vehicle is traveling in a straight line, the operator repeatedly turns the steering wheel 102 by small amounts for fine adjusting the wheel angle R of the rear wheels 119. The target line L is determined such that the actual position of the knob 102a is moved on the hysterisis loop H1 in relation to the wheel angle R of the rear wheels 119. This provides the necessary play of the steering wheel 102 when the rotation of the steering wheel'102 is switched. Therefore, when the steering wheel 102 is accidentally rotated, the rear wheels 119 do not respond over-sensitively.

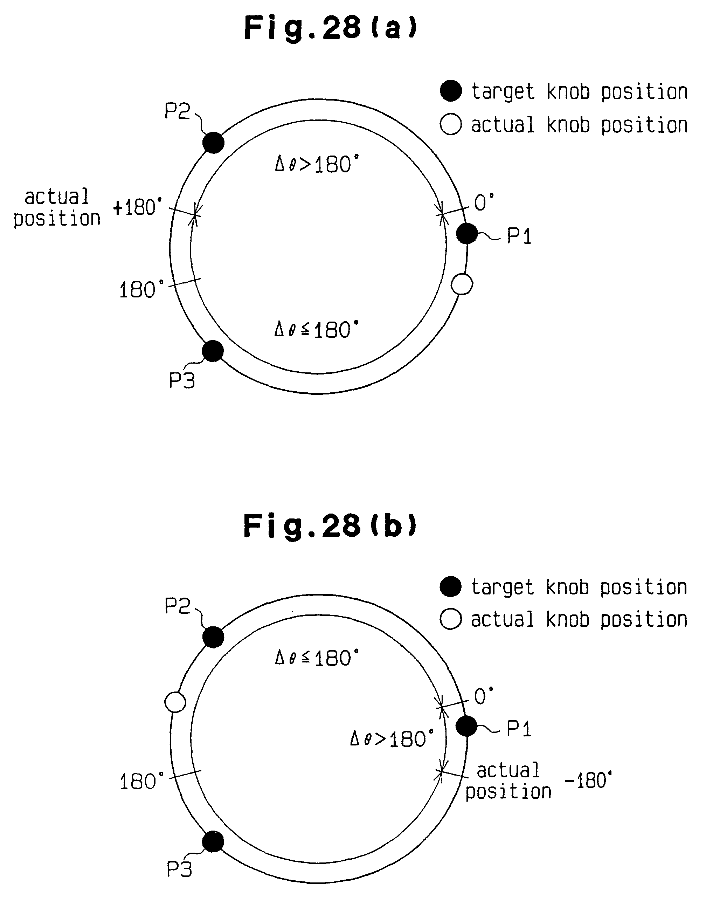

Another embodiment according to the present invention will now be described with reference to Fig. 28. In this embodiment, the knob position correction is executed only when the angle discrepancy between the actual knob position and the target position is less than 180° and the steering wheel is rotating in a direction to cause the knob 102a to approach to the target position by the shortest rotation amount. The program for executing the knob position correction is substantially the same as the flowchart of Fig. 18 except that S90 is omitted and S40 is modified.

Conditions required for starting the knob position correction when the steering wheel angle θ is equal to or smaller than 180° is different from required conditions when the steering wheel angle θ is larger than 180° . The value of the angle discrepancy Δθ is one of the conditions. First, the case in which the steering wheel angle θ is equal to or smaller than 180° will be described. The actual knob position in Fig. 28(a) represents a steering wheel angle θ that is smaller than 180° . In this case, the relation between the actual knob position and a target knob position is represented by three patterns, which are represented by three target positions P1, P2 and P3 in Fig. 28(a). The target position P1 represents a case in which the angle discrepancy Δθ is smaller than or equal to 180° and the counter value of the steering counter 44 is smaller than the counter value of the actual knob position. The target position P3 represents a case in which the angle discrepancy Δθ is smaller than or equal to 180° and the counter value of the steering counter 44 is greater than the counter value of the actual knob position. The target position P2 represents a case in which the angle discrepancy Δθ is greater than 180° and the counter value of the steering counter 44 is greater than the counter value of the actual knob position.

When the target knob position is P1 or P2, the actual knob position approaches the target position by a leftward rotation of the steering wheel. When the target knob position is P3, the actual knob position approaches the target position by a rightward rotation of the steering wheel. Also, the target direction computed at S40 is leftward rotation when the target position is P1 or P2 and is rightward rotation when the target position is P3. Therefore, in any one of the three cases of the target positions P1, P2, P3, the actual knob position approaches the target position when the target direction matches the actual rotation direction.

Next, the case in which the steering wheel angle θ is greater than 180° will be described. The actual knob position in Fig. 28(b) represents a steering wheel angle θ that is greater than 180° . In this case, the relation between the actual knob position and a target knob position is represented by three patterns, which are represented by three target positions P1, P2 and P3 in Fig. 28(b). The target position P3 represents a case in which the angle discrepancy Δθ is smaller than or equal to 180° and the counter value of the steering counter 44 is smaller than the counter value of the actual knob position. The target position P2 represents a case in which the angle discrepancy Δθ is smaller than or equal to 180° and the counter value of the steering counter 44 is greater than the counter value of the actual knob position. The target position is P1 represents a case in which the angle discrepancy Δθ is greater than 180° and the counter value of the steering counter 44 is smaller than the counter value of the actual knob position.

When the target knob position is P1 or P2, the actual knob position approaches the target position by a rightward rotation of the steering wheel. When the target knob position is P3, the actual knob position approaches the target position by a leftward rotation of the steering wheel. Also, the target direction computed at S40 is rightward rotation when the target position is P1 or P2 and is leftward rotation when the target position is P3. Therefore, in any one of the three cases of the target positions P1, P2, P3, the actual knob position approaches the target position when the target direction matches the actual rotation direction.

In this embodiment, the step S90 is omitted from the flowchart of Fig. 18. At S100, if the rotation direction matches the target direction, the CPU 141 moves to S110. In other words, the knob position correction is executed only when the correction will approach the actual knob position to the target knob position. As a result, the knob position correction (steering wheel angle correction), if executed, always reduces an angle discrepancy Δθ. In the earlier embodiments, when the operator adjusts the wheel angle of the rear wheels by repeatedly switching the rotation direction of the steering wheel by small rotation amounts, a knob position correction (steering wheel angle correction) may enlarge the angle discrepancy between the actual knob position and the target knob position. However, in this embodiment, even if the rotation direction of the steering wheel is repeatedly switched by small rotation amounts, the angle discrepancy is not enlarged, but the'actual knob position is gradually converged with the target knob position.

It should be apparent to those skilled in the art that the present invention may be embodied in many other specific forms without departing from the sprit and scope of the invention Particularly, it should be understood that the invention may be embodied in the following forms.

The vehicle speed sensor is not limited to the sensor 35, which detects rotation of the front differential gear 34. However, other types of vehicle speed sensor may be used.

The range of the steering wheel angle that corresponds to the straight line range of the rear wheels is not necessarily ± 20° but may be changed in accordance with the play of the steering wheel. When the play of the steering wheel is large, the range may be expanded and when the play is narrow, the range may be also narrowed.

The rotary encoder for detecting the steering wheel angle is not limited to an increment type but may be an absolute type. In this case, the rotation direction of the steering wheel is easily detected by comparing the angle that the rotary encoder detected in the previous routine and the angle that the rotary encoder detected in the current routine.

A detector that detects the absolute angle of the steering wheel may be employed. Japanese Unexamined Patent Publication No. 4-24270 discloses such a system. In this system, rotation of a steering shaft is decelerated by a decelerator such as a worm gear. The rotation of the steering shaft is then detected by a potentiometer. If the steering wheel angle is detected as an absolute angle, the angle of the steering wheel is used for judging whether the wheel angle of the rear wheels is in the straight line range. The accuracy of this judgment is improved by taking an angle discrepancy of the steering wheel into consideration.

A rotation type potentiometer may be employed for detecting the angle of the steering wheel. In this case, part of a whole turn (360°) of the steering wheel is not subjected to the detection. However, the undetectable range does not affect the operation of the apparatus if the neutral position of the steering wheel is arranged to be detected in the center of the detectable range.

In the embodiment of Figs. 15-24, the target control line L may be shifted downward from the ideal control line L0 in the region of positive wheel angle values R, and may be shifted upward from the ideal control line L0 in the region of negative wheel angle values R. In the embodiment of Figs. 25-27, the target control line L may be matched with the ideal control line L0.

The present invention may be applied to other industrial vehicles that have fully hydraulic power steering apparatuses. The present invention may also be employed for correcting the angle of a steering wheel that has no knob.

The "straight line range" in this specification refers to a range of wheel angle of the steered wheels within which the wheel angle is fine adjusted when the vehicle is traveling in a straight line. The "straight line range" changes in accordance with the speed of the vehicle. The maximum "straight line range" is ±10° of the wheel angle of the steered wheels.

An industrial vehicle has rear wheels (119) steered by a hydraulic power steering apparatus in accordance with a rotation of a steering wheel (102). The vehicle includes an electromagnetic switching valve (122) that corrects discrepancies between an angular position of the steering wheel (102) and a wheel angle of the rear wheels (119) by racing the steering wheel (102) when the discrepancy exceeds a predetermined value. The vehicle further includes a central processing unit (141) that suppresses the operation of the switching valve (122) under certain conditions.

**Claims**

1. A power steering apparatus for an industrial vehicle having a vehicle wheel (119), the vehicle wheel being steered by the power steering apparatus in accordance with a rotation of a steering wheel (102), the power steering apparatus further comprising:

   a hydraulic drive apparatus (112) for steering the vehicle wheel, which sets a wheel angle of the vehicle wheel (119), in response to the angular position of the steering wheel (102), wherein the angular position is indicated by a rotational angle of the steering wheel with respect to a reference angular position, and wherein the wheel angle is the angle between a plane perpendicular to a rotation axis of the vehicle wheel and a line representing straight running of the vehicle;
   a first detecting device (127) for detecting the angular position of the steering wheel (102);
   a second detecting device (128) for detecting the wheel angle of the vehicle wheel;
   a calculating device (141) for calculating a target position of the steering wheel, which is set according to the wheel angle;
   a correction device (122) for correcting output of the hydraulic drive apparatus (112), the output corresponding to the angular position of the steering wheel;
   a controller (141) for controlling the correction device (122) to maintain the difference between the angular position and the target position of the steering wheel within an allowable range;
   a third detecting device (135) for detecting the speed of the vehicle;
   a determining device (141) for determining whether the vehicle speed is greater than a predetermined value; and
   a prohibiting device (141) for prohibiting the correction device (122) from functioning when the vehicle speed is greater than the predetermined value.

2. The power steering apparatus according to claim 1, wherein the angular position of the steering wheel (102) is obtained as a relative angle from a neutral position of the steering wheel.

3. The power steering wheel apparatus according to claim 1 further comprising a wheel angle determining device (141) for determining whether the wheel angle of the vehicle wheel (119) is within straight running range of the vehicle, wherein the wheel angle determining device (141) permits operation of the correction device (122) when the wheel angle of the vehicle wheel is within the straight running range.

**4.** The power steering wheel apparatus according to claim 3, wherein the straight running range corresponds to a range of the angular positions from minus 20 degrees to plus 20 degrees as measured from the reference position.

**5.** The power steering wheel apparatus according to any one of claims 1 to 4, wherein the industrial vehicle is a forklift (1), and wherein the predetermined value of the vehicle speed ranges from about 70% to about 80% of the vehicle maximum speed.

**6.** The power steering wheel apparatus according to claim 1, wherein the first detecting device includes:

a steering shaft (103) rotatable integrally with the steering wheel;
a circular disk (37a; 129) rotatable integrally with the steering shaft, the circular disk having a plurality of openings located circumferentially; and
a photo coupler (37b; 130) for detecting the openings.

**7.** The power steering wheel apparatus according to claim 1, wherein the steering wheel has a knob (102a), wherein the controller (141) controls the correction device (122) so that the knob is positioned at the target position of the steering wheel.

**8.** A power steering apparatus for steering a vehicle wheel (31) of an industrial vehicle in accordance with rotation of a steering wheel (35), the power steering apparatus further comprising:

a hydraulic cylinder (24) for driving the vehicle wheel (31) to set a wheel angle in response to an angular position of the steering wheel, the cylinder having a first and a second oil chamber (R3, R4), wherein the vehicle wheel is steered when oil is supplied to the first or the second oil chamber, and the oil is discharged from the other oil chamber, wherein the angular position is indicated by a rotational angle of the steering wheel with respect to a reference position of the steering wheel, and wherein the wheel angle is the angle between a plane perpendicular to a rotation axis of the vehicle wheel and a line representing the straight running of the vehicle;
an oil supply device (40, 44, 45) for supplying the oil to the hydraulic cylinder (24);
an oil control device (39) for controlling the supply of the oil to the first and second oil chambers and controlling the return of the oil discharged from the first and second oil chambers to the oil supply device (40, 44, 45);
a conduit (48) for connecting the first and the second oil chambers of the cylinder;

a control valve (49) for controlling the flow of the oil in the conduit (48);
a first detecting device (37) for detecting the angular position of the steering wheel (35)
a second detecting device (32) for detecting the wheel angle of the vehicle wheel;
a steering control device (62) for calculating a target position of the steering wheel (35), which is set in accordance with the wheel angle, wherein the steering control device controls the control valve (49) to return the oil to the oil supply device (39) when a discrepancy between the angular position and the target angle is greater than an allowable value;
a third detecting device (32) for detecting a value representing a turning condition of the vehicle;
a correction determining device (62) for determining whether a correction of the angular position is to be prohibited to directly lock the steering wheel to the vehicle wheel in response to the detected turn condition value; and
a correction prohibiting device (62) for prohibiting the control of the control valve (49) by the steering control device (62) when the correction of the angular position is to be prohibited.

**9.** The power steering apparatus according to claim 8, wherein the turn condition value is a predetermined value of side acceleration acting on the vehicle when the vehicle is turning.

**10.** The power steering apparatus according to claim 8, wherein the turn condition value is a function of vehicle speed and the wheel angle when the vehicle is turning.

**11.** The power steering apparatus according to claim 10, wherein the vehicle condition value is a predetermined amount of load applied to the vehicle wheel (31).

**12.** The power steering apparatus according to claim 8, wherein the angular position of the steering wheel (35) is obtained as a relative angle from a neutral position of the steering wheel.

**13.** An industrial vehicle having the power steering apparatus according to claim 8.

**14.** The industrial vehicle according to claim 13 including a vehicle body and an axle pivotally mounted on the vehicle body in a rolling direction, wherein the pivotal motion of the axle is restricted and correction of the angular position is prohibited when the vehicle is in a condition of a lowered stability.

**15.** The industrial vehicle according to claim 13, wherein the industrial vehicle is a forklift (1).

16. A power steering apparatus according to claim 1, wherein

said correction device (122) corrects a discrepancy between the angular position of the steering wheel (35; 102) and a wheel angle of the vehicle wheel (31; 119) by racing the steering wheel when the discrepancy exceeds a predetermined value.

**Patentansprüche**

1. Servolenkgerät für ein gewerbliches Fahrzeug mit einem Fahrzeugrad (119), wobei das Fahrzeugrad durch das Servolenkgerät gemäß einer Drehung eines Lenkrads (102) gelenkt wird, und das Servolenkgerät weist des weiteren folgendes auf:

ein Hydraulikantriebsgerät (112) zum Lenken des Fahrzeugrads, das einen Radwinkel des Fahrzeugrads (119) als Reaktion auf die Winkelposition des Lenkrads (102) festlegt, wobei die Winkelposition durch einen Drehwinkel des Lenkrads hinsichtlich einer Referenzwinkelposition angegeben wird und wobei der Radwinkel der Winkel zwischen einer Ebene senkrecht zu einer Drehachse des Fahrzeugrads und einer Linie ist, die die Geradeausfahrt des Fahrzeugs darstellt;
eine erste Erfassungsvorrichtung (127) zum Erfassen der Winkelposition des Lenkrads (102);
eine zweite Erfassungsvorrichtung (128) zum Erfassen des Radwinkels des Fahrzeugrads;
eine Berechnungsvorrichtung (141) zum Berechnen einer Soll-Position des Lenkrads, die gemäß dem Radwinkel festgelegt wird;
eine Korrekturvorrichtung (122) zum Korrigieren einer Abgabe von dem Hydraulikantriebsgerät (112), wobei die Abgabe der Winkelposition des Lenkrads entspricht;
eine Steuervorrichtung (141) zum Steuern der Korrekturvorrichtung (122), um die Differenz zwischen der Winkelposition und der Soll-Position des Lenkrads innerhalb eines zulässigen Bereiches aufrecht zu erhalten;
eine dritte Erfassungsvorrichtung (135) zum Erfassen der Geschwindigkeit des Fahrzeugs;
eine Bestimmungsvorrichtung (141) zum Bestimmen, ob die Fahrzeuggeschwindigkeit größer ist als ein vorbestimmter Wert; und
eine Unterbindungsvorrichtung (141) zum Unterbinden der Funktion der Korrekturvorrichtung (122), wenn die Fahrzeuggeschwindigkeit größer ist als der vorbestimmte Wert.

2. Servolenkgerät gemäß Anspruch 1, wobei die Winkelposition des Lenkrads (102) als ein relativer Winkel von einer neutralen Position des Lenkrads erhalten wird.

3. Servorlenkradgerät gemäß Anspruch 1, des weiteren mit einer Radwinkelbestimmungsvorrichtung (141) zum Bestimmen, ob der Radwinkel des Fahrzeugrads (119) innerhalb eines Bereiches einer Geradeausfahrt des Fahrzeugs ist, wobei die Radwinkelbestimmungsvorrichtung (141) einen Betrieb der Korrekturvorrichtung (122) zulässt, wenn der Radwinkel des Fahrzeugrads innerhalb des Bereiches der Geradeausfahrt ist.

4. Servolenkradgerät gemäß Anspruch 3, wobei der bereich der Geradeausfahrt einem Bereich der Winkelpositionen von -20° bis +20° entspricht, wenn diese von der Referenzposition gemessen werden.

5. Servolenkradgerät gemäß einem der Ansprüche 1 bis 4, wobei das gewerbliche Fahrzeug ein Gabelstapler (1) ist, und wobei der vorbestimmte Wert der Fahrzeuggeschwindigkeit in einem Bereich von ungefähr 70% bis ungefähr 80% der maximalen Fahrzeuggeschwindigkeit ist.

6. Servolenkradgerät gemäß Anspruch 1, wobei die erste Erfassungsvorrichtung folgendes aufweist:

eine Lenkwelle (103), die einstückig mit dem Lenkrad drehbar ist;
eine runde Scheibe (37a, 129), die einstückig mit der Lenkwelle drehbar ist; wobei die runde Scheibe eine Vielzahl Öffnungen aufweist, die in Umfangsrichtung angeordnet sind; und
eine Lichtkoppelvorrichtung (37b; 130) zum Erfassen der Öffnungen.

7. Servolenkradgerät gemäß Anspruch 1, wobei das Lenkrad einen Drehknopf (102a) aufweist, wobei die Steuervorrichtung (141) die Korrekturvorrichtung (122) so steuert, dass der Drehknopf an der Soll-Position des Lenkrads positioniert wird.

8. Servolenkgerät zum Lenken eines Fahrzeugrads (31) eines gewerblichen Fahrzeuges gemäß einer Drehung eines Lenkrads (35), wobei das Servolenkgerät des weiteren folgendes aufweist;

einen Hydraulikzylinder (24) zum Antreiben des Fahrzeugrads (31), um einen Radwinkel als Reaktion auf eine Winkelposition des Lenkrads festzulegen, wobei der Zylinder eine erste und eine zweite Ölkammer (R3, R4) aufweist, wobei das Fahrzeugrad gelenkt wird, wenn Öl der ersten oder der zweiten Ölkammer zugeführt wird und das Öl aus der anderen Ölkammer ausgelassen wird, wobei die Winkelposition durch einen Drehwinkel des Lenkrades hinsichtlich einer Referenzposition des Lenkrades angegeben wird, und wobei der Radwinkel der Winkel zwischen einer Ebene senkrecht zu einer Drehachse des Fahrzeugrades und einer Linie ist, die die Geradeausfahrt des Fahrzeugs darstellt;

eine Ölzuführungsvorrichtung (40, 44, 45) zum Zuführen des Öls zu dem Hydraulikzylinder (24);

eine Ölsteuervorrichtung (39) zum Steuern der Zufuhr des Öls zu der ersten und der zweiten Ölkammer und zum Steuern der Rückführung des aus der ersten und der zweiten Ölkammer ausgelassenen Öls zu der Ölzuführungsvorrichtung (40, 44, 45);

einen Kanal (48) zum Verbinden der ersten und der zweiten Ölkammer des Zylinders;

ein Steuerventil (49) zum Steuern des Flusses des Öls in dem Kanal (48);

eine erste Erfassungsvorrichtung (37) zum Erfassen der Winkelposition des Lenkrads (35);

eine zweite Erfassungsvorrichtung (32) zum Erfassen des Radwinkels des Fahrzeugrads;

eine Lenksteuervorrichtung (62) zum Berechnen einer Soll-Position des Lenkrads (35), die gemäß dem Radwinkel festgelegt wird, wobei die Lenksteuervorrichtung das Steuerventil (49) zum Rückführen des Öls zu der Ölzuführungsvorrichtung (39) steuert, wenn eine Abweichung zwischen der Winkelposition und dem SollWinkel größer ist als ein zulässiger Wert;

eine dritte Erfassungsvorrichtung (32) zum Erfassen eines Wertes, der einen Kurvenzustand des Fahrzeugs darstellt;

eine Korrekturbestimmungsvorrichtung (62) zum Bestimmen, ob eine Korrektur der Winkelposition zu unterbinden ist, um das Lenkrad direkt mit dem Fahrzeugrad als Reaktion auf den erfassten Kurvenzustandswert zu verriegeln; und

eine Korrekturunterbindungsvorrichtung (62) zum Unterbinden der Steuerung des Steuerventils (49) durch die Lenksteuervorrichtung (62), wenn die Korrektur der Winkelposition zu unterbinden ist.

9. Servolenkgerät gemäß Anspruch 8, wobei der Kurvenzustandswert ein vorbestimmter Wert einer Seitenbeschleunigung ist, die auf das Fahrzeug wirkt, wenn das Fahrzeug eine Kurve fährt.

10. Servolenkgerät gemäß Anspruch 8, wobei der Kurvenzustandswert eine Funktion von einer Fahrzeuggeschwindigkeit und des Radwinkels ist, wenn das Fahrzeug eine Kurve fährt.

11. Servolenkgerät gemäß Anspruch 10, wobei der Fahrzeugzustandswert ein vorbestimmter Betrag einer Last ist, die auf das Fahrzeugrad (31) wirkt.

12. Servolenkgerät gemäß Anspruch 8, wobei die Winkelposition des Lenkrads (35) als ein relativer Winkel von einer neutralen Position des Lenkrads erhalten wird.

13. Gewerbliches Fahrzeug mit einem Servolenkgerät gemäß Anspruch 8.

14. Gewerbliches Fahrzeug gemäß Anspruch 13 mit einer Fahrzeugkarosserie und einer Achse, die an der Fahrzeugkarosserie in einer Rollrichtung schwenkbar angebracht ist, wobei die Schwenkbewegung der Achse begrenzt wird und eine Korrektur der Winkelposition unterbunden wird, wenn das Fahrzeug in einem Zustand einer verringerten Stabilität ist.

15. Gewerbliches Fahrzeug gemäß Anspruch 13, wobei das gewerbliche Fahrzeug ein Gabelstapler (1) ist.

16. Servolenkgerät gemäß Anspruch 1, wobei die Korrekturvorrichtung (122) eine Abweichung zwischen der Winkelposition des Lenkrads (35; 102) und einem Radwinkel des Fahrzeugrads (31; 119) dadurch korrigiert, dass das Lenkrad bewegt wird, wenn die Abweichung einen vorbestimmten Wert überschreitet.

**Revendications**

1. Appareil de direction assistée pour un véhicule industriel ayant une roue de véhicule (119), la roue de véhicule étant braquée grâce à l'appareil de direction assistée en fonction de la rotation d'un volant de direction (102), l'appareil de direction assistée comprenant en outre :

un appareil d'entraînement hydraulique (112) permettant de braquer la roue du véhicule, qui définit un angle de braquage de la roue du véhicule (119) en réponse à la position angulaire du volant de direction (102), dans lequel la position angulaire est indiquée par un angle de rotation du volant de direction par rapport à une position angulaire de référence, et dans lequel l'angle de braquage est l'angle entre un plan perpendiculaire à un axe de rotation de la roue du véhicule et une ligne représentant le trajet en ligne droite du véhicule ;

un premier dispositif de détection (127) permettant de détecter la position angulaire du volant de direction (102) ;

un deuxième dispositif de détection (128) permettant de détecter l'angle de braquage de la roue du véhicule ;

un dispositif de calcul (141) permettant de calculer une position cible du volant de direction, qui est définie selon l'angle de braquage ;

un dispositif de correction (122) permettant de corriger la sortie de l'appareil d'entraînement hydraulique (112), la sortie correspondant à la position angulaire du volant de direction ;

un dispositif de commande, permettant de commander le dispositif de correction (122) afin de maintenir la

différence entre la position angulaire et la position cible du volant de direction dans les limites d'une course admissible ;

un troisième dispositif de détection (135) permettant de détecter la vitesse du véhicule ;

un dispositif de détermination (141) afin de déterminer si la vitesse du véhicule est supérieure à une valeur prédéterminée ; et

un dispositif d'interdiction (141) permettant d'interdire au dispositif de correction (122) de fonctionner lorsque la vitesse du véhicule est supérieure à la valeur prédéterminée.

2. Appareil de direction assistée selon la revendication 1, dans lequel la position angulaire du volant de direction (102) est obtenue en tant qu'un angle relatif par rapport à une position neutre du volant de direction.

3. Appareil de direction assistée selon la revendication 1, comprenant en outre un dispositif de détermination de l'angle de braquage (141) permettant de déterminer si l'angle de braquage de la roue du véhicule (119) se trouve dans les limites d'une course de trajet en ligne droite du véhicule, dans lequel le dispositif de détermination de l'angle de braquage (141) autorise le fonctionnement du dispositif de correction (122), lorsque l'angle de braquage de la roue du véhicule se trouve dans les limites d'une course de trajet en ligne droite du véhicule.

4. Appareil de direction assistée selon la revendication 3, dans lequel la course de trajet en ligne droite correspond à une course des positions angulaires entre moins 20 degrés et plus 20 degrés, tel que mesuré à partir de la position de référence.

5. Appareil de direction assistée selon l'une quelconque des revendications 1 à 4, dans lequel le véhicule industriel est un chariot élévateur à fourche (1), et dans lequel la valeur prédéterminée de la vitesse du véhicule est comprise entre environ 70 % et 80 % de la vitesse maximale du véhicule.

6. Appareil de direction assistée selon la revendication 1, dans lequel le premier dispositif de détection comporte :

un arbre de direction (103) qui peut tourner en une seule pièce avec le volant de direction ;

un disque circulaire (37a ; 129) qui peut tourner en une seule pièce avec l'arbre de direction, le disque circulaire ayant une pluralité d'ouvertures situées sur la circonférence ; et

un photocoupleur (37b ; 130) permettant de détecter les ouvertures.

7. Appareil de direction assistée selon la revendication 1, dans lequel le volant de direction possède un bouton (102a), dans lequel le dispositif de commande (141) commande le dispositif de correction (122), de telle sorte que le bouton est placé dans la position cible du volant de direction.

8. Appareil de direction assistée permettant de diriger une roue de véhicule (31) d'un véhicule industriel en fonction de la rotation d'un volant de direction (35), l'appareil de direction assistée comprenant en outre :

un vérin hydraulique (24) permettant de diriger la roue de véhicule (31) afin qu'elle prenne un angle de braquage en réponse à une position angulaire du volant de direction, le vérin ayant une première et une seconde chambres d'huile (R3, R4), dans lequel la roue de véhicule est braquée lorsque l'huile alimente la première ou la seconde chambre d'huile, et l'huile est refoulée de l'autre chambre d'huile, dans lequel la position angulaire est indiquée par un angle de rotation du volant de direction par rapport à une position de référence du volant de direction, et dans lequel l'angle de braquage est l'angle entre un plan perpendiculaire à un axe de rotation de la roue du véhicule, et une ligne représentant le trajet en ligne droite du véhicule ;

un dispositif d'alimentation en huile (40, 44, 45) permettant d'alimenter le vérin hydraulique (24) en huile ;

un dispositif de commande de l'alimentation en huile (39) permettant de commander l'alimentation en huile de la première et de la seconde chambres d'huile, et de commander le retour de l'huile refoulée depuis la première et la seconde chambres d'huile vers le dispositif d'alimentation en huile (40, 44, 45) ;

un conduit (48) permettant de raccorder les première et seconde chambres d'huile du vérin ;

une soupape de commande (49) permettant de commander l'écoulement de l'huile dans le conduit (48) ;

un premier dispositif de détection (37) permettant de détecter la position angulaire du volant de direction (35) ;

un second dispositif de détection (32) permettant de détecter l'angle de braquage de la roue du véhicule ;

un dispositif de commande du braquage (62) permettant de calculer une position cible du volant de direction (35), qui est définie en fonction de l'angle de braquage, dans lequel le dispositif de commande du braquage commande la soupape de commande (49) pour renvoyer l'huile vers le dispositif d'alimentation en huile (39), lorsqu'une différence entre la position angulaire et l'angle cible est supérieure à une valeur admissible ;

un troisième dispositif de détection (32) permettant de détecter une valeur représentant une condition de virage du véhicule ;

un dispositif de détermination de correction (62) permettant de déterminer si une correction de la position angulaire doit être interdite afin de bloquer directement le volant de direction sur la roue du véhicule en réponse à la valeur de condition de virage détectée ; et

un dispositif d'interdiction de correction (62) permettant d'interdire la commande de la soupape de commande (49) grâce au dispositif de commande du braquage (62), lorsque la correction de la position angulaire doit être interdite.

9. Appareil de direction assistée selon la revendication 8, dans lequel la valeur de condition du virage est une valeur prédéterminée de l'accélération latérale qui agit sur le véhicule, lorsque le véhicule vire.

10. Appareil de direction assistée selon la revendication 8, dans lequel la valeur de condition du virage est fonction de la vitesse du véhicule et de l'angle de braquage, lorsque le véhicule vire.

11. Appareil de direction assistée selon la revendication 10, dans lequel la valeur de la condition du véhicule est une quantité prédéterminée de charge appliquée sur la roue du véhicule (31).

12. Appareil de direction assistée selon la revendication 8, dans lequel la position angulaire du volant (35) est obtenue en tant qu'angle relatif par rapport à une position neutre du volant de direction.

13. Véhicule industriel comprenant un appareil de direction assistée selon la revendication 8.

14. Véhicule industriel selon la revendication 13, dans lequel un châssis de véhicule et un essieu monté, pour pivoter, sur le châssis du véhicule, dans la direction du roulement, dans lequel le mouvement de pivotement de l'essieu est limité et la correction de la position angulaire est interdite, lorsque le véhicule se trouve dans une condition de stabilité réduite.

15. Véhicule industriel selon la revendication 13, dans lequel le véhicule industriel est un chariot élévateur à fourche (1).

16. Appareil de direction assistée selon la revendication 1, dans lequel ledit dispositif de correction (122) corrige une différence entre la position angulaire du volant de direction (35 ; 102) et un angle de braquage de la roue du véhicule (31 ; 119) en tournant rapidement le volant de direction, lorsque la différence est supérieure à une valeur prédéterminée.

# Fig.1

# Fig.2

# Fig.3

Fig.4

# Fig.5

# Fig.6(a)　　Fig.6(b)

● target knob position
○ actual knob position

# Fig.7

```
        ( rear axle control )
                 │
S100 ─  [ read DθT, Dv ]
                 │
S110 ─  [ store DθT=Dθ(1) ]
                 │
S120 ─  [ compute Gs ]
                 │
S130 ─     < Gs≧G0? >──── YES ────────────┐
                 │ NO                      │
                 │                         │
S140 ─  [ compute Δw/Δt ]                  │
                 │                         │
S150 ─     < Δw/Δt ≧Y0? >──── YES ────────┤
                 │ NO                      │
                 │              S180 ─ [ FSL←1 ]
                 │                         │
S160 ─  [ FSL←0 ]     S190 ─ [ stop S1 ]
                 │                         │
S170 ─  [ send S1 ]                        │
                 │◄─────────────────────────┘
            ( RETURN )
```

# Fig.8

steering wheel
angle correction

S200 — read C

S210 — determine Cg
based on D$\theta$T

S220 — $\Delta C = |C-Cg|$

S230 — $\Delta C \leqq 80$?  →NO

YES

S240 — $Cc = |C-Cg|$      S260 — $Cc = 160 - |C-Cg|$

S250 — $C < Cg$?  →NO

YES

S270 — FCD←1      S290 — FCD←0

( 1 )

# Fig.9

S280  FSL=0?  NO
YES

S290  ΔC≧ΔC0?  NO
YES

S300  FHD=FCD?  NO
YES

S310  send S2

S320  stop S2

RETURN

# Fig.10

steering wheel
angle detection

↓

S400 — steering
wheel rotated to
right? — NO →

YES ↓

S410 — FHD←1        S430 — FHD←0

↓                         ↓

S420 — C←C+1        S440 — C←C−1

RETURN

# Fig.11

moving direction

# Fig.12

# Fig.13

```
                        ( 1 )
                          │
                          ▼
    S500                ╱─────────────╲
              ╱────────╱   turning      ╲────────╲  YES
             ╱   condition in oversteer           ╲──────┐
             ╲         regeon φ ?        ╱                │
              ╲────────╲               ╱────────╱         │
                          NO                               │
    ( 2 )───────────────→│                                │
                          │                                │
                          ▼                                │
    S510            ╱───────────╲   NO    S540             │
             ╱─────╱  ΔC ≧ ΔC₀?  ╲─────┐                   │
             ╲─────╲             ╱     │                   ▼
                  ╲───────────╱        │        ┌─────────────────────────┐
                          │            │        │ ΔDθ = |Dθ(2) - Dθ(1)|   │
                        YES            │        └─────────────────────────┘
                          ▼            │                   │
    S520            ╱───────────╲  NO  │        S550        ▼
             ╱─────╱  FHD=FCD?   ╲─────┘         ╱──────────────╲   NO
             ╲─────╲             ╱              ╱   ΔDθ ≦ Dθ0?    ╲──────┐
                  ╲───────────╱                 ╲                ╱       │
                          │                      ╲──────────────╱        ▼
                        YES                            YES            ( 2 )
                          ▼                             ▼
    S530 ┌──────────────────────┐   S560 ┌──────────────────────┐
         │      send S2         │        │      stop S2         │
         └──────────────────────┘        └──────────────────────┘
                          │                             │
                          ▼←────────────────────────────┘
                  ╭──────────────╮
                  │   RETURN     │
                  ╰──────────────╯
```

$$\Delta C \geq \Delta C_0 ?$$

$$FHD = FCD ?$$

$$\Delta D\theta = |D\theta(2) - D\theta(1)|$$

$$\Delta D\theta \leq D\theta 0 ?$$

# Fig.14

# Fig.15

# Fig.16

# Fig.17

# Fig.18

```
          ┌──────────┐
          │  start   │
          └──────────┘
               │
               ▼
┌─────────────────────────────────────┐
│ increment control cycle counter     │──S10
└─────────────────────────────────────┘
               │
               ▼
┌─────────────────────────────────────┐
│          read θ and R               │──S20
└─────────────────────────────────────┘
               │
               ▼
┌─────────────────────────────────────┐
│      compute θg based on R          │──S30
└─────────────────────────────────────┘
               │
               ▼
┌─────────────────────────────────────┐
│      compute target direction       │──S40
└─────────────────────────────────────┘
               │
               ▼
        ┌──────────────┐
        │  compute Δθ  │──S50
        └──────────────┘
               │                S60
               ▼
          ╱──────────╲        YES
         ╱  steering   ╲──────────────────►
         ╲ wheel stopped╱
          ╲    ?    ╱
               │ NO          S70
               ▼
          ╱──────────╲        YES
         ╱  Δθ ≦ θ0 ? ╲──────────────────►
          ╲──────────╱
               │ NO          S80
               ▼
          ╱──────────╲        YES
         ╱   v ≧ vf ? ╲──────────────────►
          ╲──────────╱
               │ NO          S90
         NO    ▼
     ◄─────╱──────────╲
          ╱  Δθ ≦ A° ? ╲
           ╲──────────╱
               │ YES
               ▼                    S100
    YES   ╱──────────────────╲   NO
   ◄─────╱ rotation direction= ╲─────────►
         ╲  target direction   ╱
           ╲       ?      ╱
               ╲────────╱
┌──────────────┐              ┌──────────────┐
│    open      │              │    close     │
│ switch valve │              │ switch valve │
└──────────────┘              └──────────────┘
   S110              │               S120
                     ▼
               ┌──────────┐
               │  return  │
               └──────────┘
```

# Fig.19

```
              ( interrupt routine )
                        │
                        ↓  S210
          frist       ╱ source ╲      second
        transistor   ╱   of starting ╲  transistor
                    ╱   edge signal    ╲
        S220┐      ╱        ?          ╲      ┌S230
       NO  ╱ rising ╲                  ╱ rising ╲  NO
      ┌───╱  edge ?  ╲              ╱  edge ?  ╲───┐
      │   ╲          ╱              ╲          ╱   │
      │    ╲        ╱                ╲        ╱    │
      │      YES                       YES        │
 S250 ↓                                           ↓ S270
   ╱ output ╲                              ╱ output ╲
  ╱ level of  ╲                          ╱ level of  ╲
 H╱  second    ╲                        ╱   first     ╲L
 ┌╲ transistor ╱        S240    S260    ╲ transistor  ╱┐
 │  ╲    ?    ╱                          ╲     ?      ╱ │
 │   ╲      ╱    ╱ output ╲    ╱ output ╲  ╲        ╱   │
 │    ╲    ╱    ╱ level of  ╲  ╱ level of ╲ ╲      ╱    │
 │     ╲  ╱    ╱   second    ╲H╱  first    ╲ ╲    ╱     │
 │      ╲╱    ╲ transistor  ╱  ╲ transistor╱  ╲  ╱      │
 │      L      ╲    ?     ╱L  H ╲    ?    ╱    ╲╱       │
 │              ╲       ╱        ╲       ╱      │       │
 │      L        ╲     ╱          ╲     ╱    L  │   H   │
 │               ↓H    │          │   ↓L        │
 │                     └────┬─────┘             │
 │                          ↓                   │
 ↓                          │                   ↓
┌───────────────────────┐  │  ┌──────────────────────────┐
│ rotation direction left│  │  │ rotation direction right │
└───────────────────────┘  │  └──────────────────────────┘
         └─────┬────────────┴──────────┘
   S290        │                              S280
        S300 ┐ ↓
      ┌──────────────────────────────────┐
      │      change counter value C      │
      └──────────────────────────────────┘
                        ↓  S310
               ╱  C1≧CO?  ╲    NO
              ╱            ╲────────┐
               ╲          ╱         │
                  YES               │
  S320 ┌──────────────────────────┐ │
       │ steering wheel not rotated│ │
       └──────────────────────────┘ │
                        ↓←───────────┘
  S330 ┌──────────────────────────┐
       │ clear control cycle counter│
       └──────────────────────────┘
                        ↓
                  ( return )
```

# Fig.20

# Fig.21

## Fig.22

● target knob position
○ actual knob position

## Fig.23

● target knob position
○ actual knob position

# Fig.24

correction prohibited

vehicle
speed

vf

0    wheel angle

# Fig.25

correction prohibited

vehicle
speed

vf

0    wheel angle

straight line
range

# Fig.26

```
                    S60
              steering              YES
            wheel stopped  ─────────────────────────┐
                 ?                                   │
                 │ NO                                │
                 ▼          S70                      │
              Δθ ≤ θ₀?       YES ────────────────────┤
                 │ NO                                │
                 ▼          S80                      │
               v ≥ vf?       YES ──────┐             │
                 │ NO                  ▼             │
                 │                  S380             │
                 │              wheel                │
                 │            angle within    NO     │
                 │              straight ────────────┤
                 │            line range             │
                 │                 ?                 │
                 │                YES                │
                 │◄────────────────┘                 │
                 ▼          S90                      │
        NO    Δθ ≤ A°?                               │
     ┌────────────                                   │
     │           │ YES                               │
     │           ▼          S100                     │
     │  YES  rotation direction=    NO               │
     │◄──────  target direction ───────────────────►│
     │           ?                                   │
     ▼                                               ▼
  open                                            close
switch valve                                   switch valve
     │                                               │
   S110                                            S120
     └──────────────►  return  ◄────────────────────┘
```

# Fig.27

EP 0 872 405 B1

# Fig.28(a)

● target knob position
○ actual knob position

P2

Δθ>180°

actual
position +180°

180°

Δθ≦180°

0°

P1

P3

# Fig.28(b)

● target knob position
○ actual knob position

P2

Δθ≦180°

0°

Δθ>180°

P1

180°

actual
position −180°

P3

# Fig.29